# EUROPÄISCHE PATENTSCHRIFT

(11) **EP 1 934 027 B1**
(45) Veröffentlichungstag und Bekanntmachung des Hinweises auf die Patenterteilung: **23.09.2009**
(21) Anmeldenummer: 06806918.6
(22) Anmeldetag: 02.10.2006
(51) Int. Cl.: B27K 3/15, B27K 1/00, F26B 21/00

(54) **HERSTELLUNG MODIFIZIERTER LIGNOCELLULOSEMATERIALIEN**
PRODUCTION OF MODIFIED LIGNOCELLULOSIC MATERIALS
PROCEDE POUR PRODUIRE DES MATIERES A BASE DE LIGNOCELLULOSE MODIFIEES

(30) Priorität: 04.10.2005 DE 102005047362
(43) Veröffentlichungstag der Anmeldung: 25.06.2008
(73) Patentinhaber: BASF SE, 67056 Ludwigshafen (DE)
(72) Erfinder: KINGMA, Arend Jouke, 67069 Ludwigshafen (DE); WEINGART, Franz, 69469 Weinheim (DE); SCHAFFERT, Stefan, 64625 Bensheim (DE); MILITZ, Holger, 37120 Bovenden (DE); KRAUSE, Andreas, 37120 Bovenden (DE); WEPNER, Falko, 83561 Ramerberg (DE)
(74) Vertreter: Reitstötter - Kinzebach
(86) Internationale Anmeldenummer: PCT/EP2006/066957
(87) Internationale Veröffentlichungsnummer: WO 2007/039590

(56) Entgegenhaltungen:
- EP-A- 0 199 092
- WO-A-90/06840
- WO-A-20/04033170
- GB-A- 2 365 029

## Beschreibung

Die vorliegende Erfindung betrifft ein Verfahren zur Herstellung modifizierter Lignocellulosematerialien, bei dem man das Lignocellulosematerial zunächst mit einer wässrigen Zusammensetzung imprägniert, die wenigstens eine vernetzbare Stickstoffverbindung und wenigstens eine die Vernetzung katalysierende Substanz enthält, und das imprägnierte Lignocellulosematerial anschließend einer Behandlung bei erhöhter Temperatur zur Entfernung des Wassers und zur Vernetzung der vernetzbaren Stickstoffverbindung unterzieht.

Lignocellulosematerialien, insbesondere Holz, aber auch andere Lignocellulosematerialien wie Bambus, Naturfasern und dergleichen sind als Bau- und Konstruktionsmaterialien für viele Anwendungen von Interesse. Von Nachteil ist, dass die natürliche Dauerhaftigkeit dieser Materialien sowohl durch Einwirken von Feuchtigkeit, aber auch durch Veränderungen des Feuchtigkeitsgehaltes in der umgebenden Atmosphäre nachteilig beeinflusst wird. Grund hierfür ist die Eigenschaft von Lignocellulose-Materialien, bei Kontakt mit Wasser oder in feuchter Atmosphäre Wasser einzulagern und in trockener Atmosphäre wieder abzugeben. Die damit einhergehende Quellung bzw. Schwindung und die damit verbundene mangelnde Dimensionsstabilität der Materialien ist nicht nur für viele Anwendungen unerwünscht, sondern kann im Extremfall auch zu einer Zerstörung des Materials durch Rissbildung führen. Zudem werden diese Materialien im feuchten Zustand von holzabbauenden oder holzverfärbenden Mikroorganismen befallen, was in vielen Fällen die Ausrüstung dieser Materialien mit Fungiziden oder Bioziden erforderlich macht. Abgesehen vom Kostenaspekt ist eine derartige Ausrüstung auch unter Umweltaspekten von Nachteil.

Zur Verbesserung der Haltbarkeit und Dimensionsstabilität werden Holz und vergleichbare Lignocellulose-basierte Materialien häufig hydrophobiert, z. B. durch Behandlung mit Wachs-haltigen Tränkmitteln. Hierdurch wird ein Eindringen von Wasser in die Poren des Materials erschwert, die Dimensionsstabilität dieser Materialien verbessert und die Gefahr eines Befalls mit Pilzen oder Bakterien verringert.

Es wurde vorgeschlagen, die Dimensionsstabilität von Holz und Holzmaterialien wie Span- und Faserplatten und ihre Beständigkeit gegenüber holzzerstörenden Organismen durch die Acetylierung der Holz-Partikel mit Hilfe von Anhydriden, wie Essigsäureanhydrid zu verbessern (siehe EP-A 213252 und darin zitierte Literatur sowie Rowell et al., Wood and Fiber Science, 21 (1), S. 67-79). Nachteilig sind die hohen Kosten der Behandlung und der unangenehme Eigengeruch des so behandelten Materials, so dass sich diese Maßnahmen auf dem Markt nicht durchgesetzt haben.

Aus der Veröffentlichung "Treatment of timber with water soluble dimethylol resins to improve the dimensional stability and durability", erschienen in Wood Science and Technology 1993, Seiten 347-355, ist es bekannt, zur Verbesserung der Schwind- und Quelleigenschaften von Holz sowie des Widerstandes gegen Pilze und Insekten dieses mit einem Imprägniermittel zu behandeln, das aus einer wässrigen Lösung von Dimethyloldihydroxyethylenharnstoff (DMDHEU oder 1,3- Bis(hydroxymethyl)-4,5-dihydroxyimidazolidinon-2) und einem Katalysator besteht. Bei erhöhter Temperatur findet eine Reaktion des DMDHEU mit sich selbst und dem Holz statt. Auf diese Weise wurden Holzkörper mit Abmessungen von 20 mm x 20 mm x 10 mm untersucht. Das beschriebene Verfahren lässt sich nur bei kleinen Abmessungen der Holzkörper anwenden, weil diese bei größeren Abmessungen zu Rissbildung neigen.

Die WO 2004/033170 beschreibt ein Verfahren zur Verbesserung der Oberflächenhärte von Holz, bei dem man einen unbehandelten Holzkörper mit einer wässrigen Lösung imprägniert, die eine vernetzbare Stickstoffverbindung aus der Gruppe der mit einem C₁₋₅-Alkohol, einem Polyol oder deren Gemischen modifizierten 1,3-Bis(hydroxymethyl)-4,5-dihydroxyimidazolidin-2-one, gegebenenfalls 1,3- Bis(hydroxymethyl)-4,5-dihydroxyimidazolidinon-2, 1,3-Dimethyl-4,5-dihydroxyimidazolidinon-2, Dimethylolharnstoff, Bis(methoxymethyl)harnstoff, Tetramethylolacetylenediharnstoff, 1,3-Bis(hydroxymethyl)imidazolidinon-2 oder Methylolmethylharnstoff als weiteres Imprägniermittel und einen die Vernetzung dieser Verbindungen bewirkenden Katalysator enthält, und den imprägnierten Holzkörper anschließend unter Aufrechterhaltung feuchter Bedingungen bei erhöhter Temperatur aushärtet.

Aus der WO 2004/033171 ist ein ähnliches Verfahren bekannt, bei dem die Imprägnierlösung ein mit Alkanolen oder Polyolen modifiziertes 1,3-Bis(hydroxymethyl)-4,5-dihydroxyimidazolidinon, 1,3-Bis(hydroxymethyl)harnstoff, 1,3-Bis(methoxymethyl)harnstoff, 1-Hydroxymethyl-3-methylharnstoff, 1,3-Bis(hydroxymethyl)imidazolidin-2-on, 1,3-Dimethyl-4,5-dihydroxyimidazolidin-2-on oder Tetra(hydroxymethyl)acetylendiharnstoff enthält.

PCT/EP 2006/004020 (die ältere deutsche Patentanmeldung 102005020387.6) beschreibt die Oberflächenbehandlung von Formkörpern aus modifiziertem Holz oder modifizierten Holzmaterialien oder anderen Werkstoffen aus modifizierten Lignocellulosematerialien, wobei das modifizierte Holzmaterial bzw. der modifizierte Werkstoff aus dem Lignocellulosematerial zuvor, ähnlich wie in WO 2004/033170 und WO 2004/033171, mit vernetzbaren Stickstoffverbindungen imprägniert und vernetzt werden.

PCT/EP 2006/004019 (die ältere deutsche Patentanmeldung 102005020386.8) beschreibt modifizierte Holzmaterialien, die mit einer reaktiven Zusammensetzung auf Basis vernetzbarer Stickstoffverbindungen imprägniert und vernetzt werden, die neben wenigstens einer vernetzbaren Stickstoffverbindung wenigstens einen Effektstoff in gelöster oder dispergierter Form enthält.

PCT/EP 2006/004016 und PCT/EP 2006/004014 (die älteren deutschen Patentanmeldungen 102005020390.6 und 102005020389.2) beschreiben modifizierte Holzmaterialien, die mit einer reaktiven Zusammensetzung imprägniert und vernetzt werden, die neben wenigstens einer vernetzbaren Stickstoffverbindung einen dispergierten, hydrophoben Bestandteil enthält.

PCT/EP 2006/001979 (die ältere deutsche Patentanmeldung 102005010042.2) beschreibt modifizierte Holzmaterialien aus feinteiligen Holzmaterialien, bei denen das feinteilige Holzmaterial mit einer reaktiven Zusammensetzung auf Basis vernetzbarer Stickstoffverbindungen imprägniert und einem Formgebungsprozess unterworfen wird, bei dem gleichzeitig eine Vernetzung durchgeführt wird. Auch kann die Vernetzung vor dem Formgebungsprozess erfolgen.

PCT/EP 2006/001980 (die ältere deutsche Patentanmeldung 102005010041.4) beschreibt modifizierte Holzmaterialien, die wenigstens eine mit einem Träger oder weiteren Furnierlagen flächig verklebte dünne Furnierschicht aufweisen, wobei die Furnierschicht mit einer reaktiven Zusammensetzung auf Basis vernetzbarer Stickstoffverbindungen imprägniert, beleimt und zu einem Furnier verklebt wird.

PCT/EP 2006/004015 (die ältere deutsche Patentanmeldung 102005020388.4) beschreibt modifizierte Holzmaterialien, die mit einer reaktiven Zusammensetzung imprägniert und vernetzt werden, welche
a) wenigstens eine niedermolekulare Verbindung V, welche wenigstens zwei N-gebundene Gruppen der Formel CH₂OH und/oder eine zwei Stickstoffatome verbrückende 1,2-Bishydroxyethan-1,2-diyl-Gruppe aufweist, und
b) wenigstens ein Oligo- oder Polyalkylenetherpolyol P mit im Mittel wenigstens 2 OH-Gruppen, insbesondere 2 bis 6 OH-Gruppen, je Molekül, der wenigstens eine zwei- oder mehrwertige aliphatische oder cycloaliphatische Gruppe mit wenigstens 3 C-Atomen, insbesondere mit 3 bis 10 C-Atomen aufweist, und/oder
c) ein Reaktionsprodukt einer niedermolekularen Verbindung V mit dem Polyalkylenetherpolyol enthält.

Die zuvor genannten Modifizierungsverfahren sind zum Teil bezüglich der erzielten Fixierung des Modifizierungsmittels in dem damit behandelten Lignocellulosematerial, insbesondere bei höheren Beladungsgraden an Stickstoffverbindung, nicht zufriedenstellend. So kann beim Kontakt mit Wasser der nicht fixierte Anteil des Modifizierungsmittels nach und nach ausgewaschen werden, wodurch die mit der Imprägnierung erzielten vorteilhaften Verbesserungen der Materialelgenschaften teilweise wieder verloren gehen. Eine Nachbehandlung des Materials kann vorzeitig erforderlich werden.
Auch unter dem Aspekt des Umweltschutzes ist ein Auswaschen des Modifizierungmittels unerwünscht. Zudem ist die Formaldehydemission insbesondere bei höheren Beladungsgraden an vernetzbarer Stickstoffverbindung nicht immer zufriedenstellend.

Der vorliegenden Erfindung liegt daher die Aufgabe zu Grunde, ein Verfahren zur Modifizierung von Lignocellulosematerialien, insbesondere von Holz und speziell von großformatigen Holzkörpem zur Verfügung zu stellen, welches die hier geschilderten Nachteile des Standes der Technik überwindet.

Es wurde überraschenderweise gefunden, dass diese Aufgabe gelöst wird, indem man ein Lignocellulosematerial mit einer wässrigen Lösung einer vernetzbaren Stickstoffverbindung imprägniert und anschließend mit Heißdampf behandelt, wobei der Heiβdampf eine Temperatur von wenigstens 105°C aufweist. Ein erster Gegenstand der Erfindung ist daher ein Verfahren zur Herstellung modifizierter Lignocellulosematerialien, umfassend
a) Imprägnieren des Lignocellulosematerials mit einer wässrigen Zusammensetzung, die i) wenigstens eine vernetzbare Stickstoffverbindung und ii) wenigstens eine die Vernetzung katalysierende Substanz enthält,
b) Behandeln des imprägnierten Lignocellulosematerials bei erhöhter Temperatur zur Entfernung des Wassers und zur Vernetzung der vernetzbaren Stickstoffverbindung,
wobei der Verfahrensschritt b) eine Behandlung des imprägnierten Lignocellulosematerials mit überhitztem Wasserdampf umfasst, wobei der überhitzte wasserdampf eine Temperatur von wenigstens 105°C aufweist.

Die durch das erfindungsgemäße Verfahren imprägnierten Lignocellulosematerialien zeichnen sich durch eine sehr gute Fixierung des Modifizierungsmittels aus. Die erfindungsgemäß erhältlichen Lignocellulosematerialien weisen in der Regel Fixierungsgrade von mehr als 73 %, vorzugsweise wenigstens 78 %, insbesondere wenigstens 80 %, besonders bevorzugt mehr als 83 % und ganz besonders bevorzugt mehr als 85 % auf und zeigen im Vergleich zu konventionell modifizierten Materialien eine erhöhte biologische Dauerhaftigkeit Unter dem Fixierungsgrad wird der prozentuale Anteil an in dem modifizierten Lignocellulosematerial befindlicher Stickstoffverbindung verstanden, der nicht mehr mit Wasser extrahierbar ist. Die Bestimmung des extrahierbaren Anteils erfolgt über den Stickstoffgehalt eines modifizierten Lignocellulosematerials vor und nach einer Extraktion mit heißem Wasser. Hierzu wird ein modifiziertes Lignocellulosematerial zu einem Mehl vermahlen, atro (atro: Abkürzung für "absolut trocken", Basis ist 0% Wassergehalt) getrocknet und der Stickstoffgehalt im Lignocellulosematerial mittels Elementaranalyse bestimmt. Anschließend wird eine Probe des Mehls 16 h bei 80 °C mit Wasser extrahiert, abfiltriert, erneut atro getrocknet und der Stickstoffgehalt der so gewonnnen Probe mittels Elementaranalyse bestimmt. Da unmodifiziertes Lignocellulosematerial selber keine nachweisbaren Mengen Stickstoff enthält, ergibt sich aus der Differenz des Stickstoffgehalts vor und nach der Extraktion direkt der extrahierbare Anteil in %, bezogen auf den Stickstoffwert der Probe vor Extraktion. Alternativ und mit noch höherer Genauigkeit kann der Fixierungsgrad, also der nicht mehr mit Wasser extrahierbare Stickstoffgehalt, auch nach der Norm DIN EN 84 bestimmt werden. Hierzu wird der Probekörper zunächst 20 Minuten in entionisiertem Wasser in einem Gefäß evakuiert. Nach 2 Stunden wird das Wasser zum ersten Mal gewechselt. Nach weiteren 24 h erfolgt der 2. Wechsel. Insgesamt wird jeweils im 24-h-Takt 9x das Wasser gewechselt (mit Ausnahme des Wochenendes). Nach der Auswaschung wird die Probe getrocknet, gemahlen, atro getrocknet und der Stickstoffgehalt der so gewonnnen Probe mittels Elementaranalyse bestimmt.

Im Lignocellulosematerial verteilt bedeutet, dass die vernetzte Stickstoffverbindung mehr oder weniger gleichmäßig über den Querschnitt des Lignocellulosematerials verteilt ist und sich nicht nur an der Oberfläche oder in Kavitäten des Lignocellulosematerials befindet.

Die Menge der vernetzbaren Stickstoff-Verbindung im Lignocellulosematerial beträgt in der Regel wenigstens 0,5 Gew.-%, häufig wenigstens 1 Gew.-%, insbesondere wenigstens 1,5 Gew.-%, besonders bevorzugt wenigstens 2,0 Gew.-% und speziell wenigstens 2,3 Gew.-% oder darüber, jeweils gerechnet als Stickstoff und bezogen auf das Gesamtgewicht des modifizierten Lignocellulosematerials. Die Menge der vernetzbaren Stickstoff-Verbindung liegt typischerweise im Bereich von 1 bis 25 Gew.-%, häufig im Bereich von 1,5 bis 20 Gew.-%, insbesondere im Bereich 1,8 bis 18 Gew.-%, besonders bevorzugt im Bereich von 2,0 bis 15 Gew.-% und speziell im Bereich von 2,3 bis 12 Gew.-%, jeweils gerechnet als Stickstoff und bezogen auf das Gesamtgewicht des modifizierten Lignocellulosematerials. Der Stickstoffanteil kann mittels Elementaranalyse bestimmt werden.

Aufgrund der unterschiedlichen Dichte von Hölzern wird man bei Holzarten mit niedriger Dichte wie Kiefer (Pinus spp.), Fichte oder Pappel in der Regel höhere Gehalte an Stickstoffverbindung erzielen, vorzugsweise Gehalte von wenigstens 2,5 Gew.-%, insbesondere wenigstens 3 Gew.-%, z.B. im Bereich von 2,5 bis 20 Gew.-% oder 3 bis 15 Gew.-%. Bei Holzarten mit höherer Dichte wie Buche, Ahorn oder Esche liegt der Gehalt an Stickstoffverbindung, gerechnet als Stickstoff und bezogen auf das Gesamtgewicht des Lignocellulosematerials, vorzugsweise im Bereich von 1,8 bis 15 Gew.-% und insbesondere im Bereich von 2 bis 12 Gew.-%.

Bezogen auf das Gesamtvolumen des Lignocellulosematerials beträgt der Gehalt an Stickstoffverbindung, gerechnet als Stickstoff, vorzugsweise wenigstens 11 kg/m³, insbesondere wenigstens 12 kg/m³ und speziell wenigstens 13 kg/m³, z.B. 11 bis 120 kg/m³, vorzugsweise 12 bis 100 kg/m³ und insbesondere 13 bis 80 kg/m³.

Alle Angaben zum Gehalt an vernetzbarer Stickstoffverbindung beziehen sich auf das Gesamtgewicht des modifizierten Lignocellulosematerials und sind als Mittelwerte von in der Regel wenigstens 5 Einzelbestimmungen zu verstehen, die bei großformatigen Lignocellulosematerialien wie Vollholzkörpern über den Gesamtquerschnitt des Lignocellulosematerials bestimmt werden.

Für den Einsatz in dem erfindungsgemäßen Verfahren eignen sich prinzipiell alle Lignocellulosematerialien, unabhängig von ihrer stofflichen oder strukturellen Zusammensetzung oder ihrem Format. Dazu zählen auch bereits vorbehandelte Lignocellulosematerialien, sofern sie sich mit einer wässrigen Zusammensetzung, die wenigstens eine vernetzbare Stickstoffverbindung und wenigstens eine die Vernetzung katalysierende Substanz enthält, imprägnieren lassen und das imprägnierte Lignocellulosematerial sich anschließend einer Vernetzung unterziehen lässt. Geeignete Lignocellulosematerialien sind z.B. Holz, insbesondere Vollholz, aber auch Furniere und feinteilige Lignocellulosematerialien wie Späne, Fasern oder Strands zur Herstellung von Holzwerkstoffen und Furnierwerkstoffen.

Zu den feinteiligen Lignocellulosematerialien zählen Fasern, Späne, Strands, Chips, Schnitzel und dergleichen. Unter Furnieren versteht man flächige dünne Holzmaterialien mit Dicken ≤ 5 mm, insbesondere≤ 1 mm. Insbesondere werden in Schritt a) großformatige Teile mit Mindestabmessungen oberhalb 1 mm, insbesondere > 5 mm, speziell ≥ 10 mm und speziell großformatige Teile aus Vollholz bzw. Massivholz imprägniert.

Zur Herstellung modifizierter Holzmaterialien sind grundsätzlich alle Holzsorten geeignet, vorzugsweise solche, die wenigstens 30 %, insbesondere wenigstens 50 % ihres Trockengewichts an Wasser aufnehmen können, und besonders bevorzugt solche, die in die Tränkbarkeitsklassen 1 und 2 gemäß DIN EN 350-2 eingeordnet werden. Hierzu zählen beispielsweise Hölzer von Nadelbäumen wie Kiefer (Pinus spp.), Fichte, Douglasie, Lärche, Pinie, Tanne, Küstentanne, Zeder und Zirbel, sowie Hölzer von Laubbäumen, z. B. Ahorn, Hardmaple, Akazie, Ayons, Birke, Birne, Buche, Eiche, Erle, Espe, Esche, Elsbeere, Hasel, Hainbuche, Kirsche, Kastanie, Linde, amerikanischer Nussbaum, Pappel, Olive, Robinie, Ulme, Walnuss, Gummibaum, Zebrano, Weide, Zerreiche und dergleichen. Da durch die Imprägnierung auch bei preiswerten Hölzern Eigenschaften erzielt werden, wie sie sonst nur Tropenhölzer aufweisen, beispielsweise ein äußerst geringes Quell-/Schwind-Verhalten, hohe Festigkeiten und gute Witterungsbeständigkeit, betrifft eine besondere Ausführungsform der Erfindung die Verwendung von modifiziertem Holz bzw. Holzmaterial, dessen Holzbestandteil ausgewählt ist unter Buche, Fichte, Kiefer, Birke, Pappel, Esche und Ahorn.

Das erfindungsgemäße Verfahren eignen sich auch zum Imprägnieren anderer, von Holz verschiedener Lignocellulosematerialien, z. B. von Naturfaserstoffen wie Bambus, Bagasse, Baumwollstängel, Jute, Sisal, Stroh, Flachs, Kokosfasern, Bananenfasern, Schilf, z.B. Chinaschilf, Ramie, Hanf, Manilahanf, Esparto (Alfagras), Reisschalen und Kork.

Für den Einsatz in Schritt a) des erfindungsgemäßen Verfahrens geeignete vernetzbare Stickstoffverbindungen sind
α) niedermolekulare Verbindungen V, welche wenigstens eine, insbesondere wenigstens zwei, N-gebundene Gruppen der Formel CH₂OR, worin R für C₁-C₄-Alkyl oder insbesondere für Wasserstoff steht, und gegebenenfalls eine 1,2-Bishydroxyethan-1,2-diyl-Gruppe, die zwei Stickstoffatome verbrückt, aufweisen,
β) Präkondensate der Verbindung V und
γ) Umsetzungsprodukte oder Mischungen der Verbindung V mit wenigstens einem Alkohol, der unter C₁-C₆-Alkanolen, C₂-C₆-Polyolen und Oligoalkylenglykolen ausgewählt ist.

Bei den zur Imprägnierung des Lignocellulosematerials in Schritt a) eingesetzten vernetzbaren Stickstoffverbindungen der Gruppen α), β) und γ), d.h. Verbindungen V, deren Präkondensate und Umsetzungsprodukte, handelt es sich vorzugsweise um niedermolekulare Verbindungen oder um Oligomere mit geringem Molekulargewicht, die in der eingesetzten wässrigen Zusammensetzung in der Regel vollständig gelöst vorliegen. Das Molekulargewicht der vernetzbaren Verbindung liegt üblicherweise unterhalb 400 Dalton. Man nimmt an, dass die vernetzbaren Stickstoffverbindungen aufgrund dieser Eigenschaften in die Zellwände des Holzes eindringen können und beim Härten die mechanische Stabilität der Zellwände verbessern und ihre durch Wasser bewirkte Quellung vermindern.

Beispiele für vernetzbare Stickstoffverbindungen sind, ohne darauf beschränkt zu sein:
- 1,3-Bis(hydroxymethyl)-4,5-dihydroxyimidazolidin-2-on (DMDHEU),
- 1,3-Bis(hydroxymethyl)-4,5-dihydroxyimidazolidin-2-on, das mit einem C₁-C₆-Alkanol, einem C₂-C₆-Polyol oder einem Oligoalkylenglykol modifiziert ist (modifiziertes DMDHEU bzw. mDMDHEU),
- 1,3-Bis(hydroxymethyl)harnstoff,
- 1,3-Bis(methoxymethyl)harnstoff,
- 1-Hydroxymethyl-3-methylharnstoff,
- 1-Hydroxymethyl-3-methyl-4,5-dihydroxyimidazolidin-2-on,
- 1-Hydroxymethyl-4,5-dihydroxyimidazolidin-2-on,
- 1,3-Bis(hydroxymethyl)imidazolidin-2-on (Dimethylolethylenharnstoff),
- 1,3-Bis(hydroxymethyl)-1,3-hexahydropyrimidin-2-on (Dimethylolpropylenharnstoff),
- 1,3-Bis(methoxymethyl)-4,5-dihydroxyimidazolidin-2-on (DMeDHEU),
- Tetra(hydroxymethyl)acetylendiharnstoff,
- niedermolekulare Melamin-Formaldehyd-Harze (MF-Harze) wie Poly(hydroxymethyl)melamin mit wenigstens 2, z.B. 2, 3, 4, 5 oder 6 N-Hydroxymethylgruppen, wie 3-fach methyloliertes Melamin (= 2,4,6-Tris-(N-hydroxymethylamino)-1,3,5-triazin) und
- niedermolekulare Melamin-Formaldehyd-Harze (MF-Harze) wie Poly(hydroxymethyl)melamin mit wenigstens 2, z.B. 2, 3, 4, 5 oder 6 N-Hydroxymethylgruppen, die mit einem C₁-C₆-Alkanol, einem C₂-C₆-Polyol oder einem Oligoalkylenglykol modifiziert sind (modifizierte MF-Harze)
   und Mischungen davon.

Unter den vernetzbaren Stickstoffverbindungen sind insbesondere die Verbindungen V (Gruppe α) und deren Präkondensate (Gruppe β) bevorzugt. Hierunter sind insbesondere die Verbindungen der Gruppe α) und speziell solche mit R = H bevorzugt.

Unter den Verbindungen V sind insbesondere niedermolekulare Verbindungen V^{x} bevorzugt, welche wenigstens zwei N-gebundene Gruppen der Formel CH₂OR, worin R für C₁-C₄-Alkyl oder insbesondere für Wasserstoff steht, und gegebenenfalls eine, zwei Stickstoffatome verbrückende 1,2-Bishydroxyethan-1,2-diyl-Gruppe aufweisen.

Unter den Verbindungen V sind Harnstoff und Harnstoffderivate, die an jedem Stickstoffatom der Harnstoffeinheit eine Gruppe der Formel CH₂OR tragen (im Folgenden auch Verbindungen V^{x1}), wobei R die zuvor genannte Bedeutung hat und insbesondere für Wasserstoff steht, bevorzugt.

Besonders bevorzugt ist 1,3-Bis(hydroxymethyl)-4,5-dihydroxyimidazolidin-2-on, 1,3-Bis(hydroxymethyl)harnstoff, 1,3-Bis(hydroxymethyl)imidazolidin-2-on, Tetra(hydroxymethyl)acetylendiharnstoff und speziell 1,3-Bis(hydroxymethyl)-4,5-dihydroxyimidazolidin-2-on (DMDHEU).

Unter den vernetzbaren Stickstoffverbindungen sind weiterhin Melaminverbindungen bevorzugt, die im Mittel an wenigstens 2 und vorzugsweise an jeder Aminogruppe des Melamins wenigstens eine Gruppe der Formel CH₂OR tragen, wobei R die zuvor genannte Bedeutung hat und insbesondere für Wasserstoff oder Methyl steht. Insbesondere bevorzugt sind Melaminverbindungen, die 2 bis 6 und insbesondere 3 bis 5 Gruppen der Formel CH₂OR aufweisen, wobei R gleich oder verschieden sein kann und für Wasserstoff oder C₁-C₄-Alkyl und speziell für Wasserstoff oder Methyl steht. Solche Verbindungen sind durch Umsetzung von Melamin mit 2 bis 6 und insbesondere 3 bis 5 Mol Formaldehyd, pro Mol Melamin (R = H), und gegebenenfalls mit 2 bis 6, insbesondere 3 bis 5 Mol C₁-C₄-Alkanolen, pro Mol Melamin (R = C₁-C₄-Alkyl), insbesondere mit C₁-C₂-Alkanolen wie Methanol erhältlich.

Für den Einsatz in Schritt a) des erfindungsgemäßen Verfahrens geeignete vernetzbare Stickstoffverbindungen sind insbesondere auch
α) niedermolekulare Verbindungen V^{y}, welche eine N-gebundene Gruppe der Formel CH₂OR, worin R für C₁-C₄-Alkyl oder insbesondere für Wasserstoff steht, und gegebenenfalls eine1,2-Bishydroxyethan-1,2-diyl-Gruppe, die zwei Stickstoffatome verbrückt, aufweisen, und
γ) Umsetzungsprodukte oder Mischungen der Verbindung V^{y} mit wenigstens einem Alkohol, der unter C₁-C₆-Alkanolen, C₂-C₆-Polyolen und Oligoalkylenglykolen ausgewählt ist.

Bevorzugte Verbindungen V^{y} sind Harnstoff und Harnstoffderivate, die an einem Stickstoffatom der Harnstoffeinheit eine Gruppe der Formel CH₂OR tragen (im Folgenden auch Verbindungen V^{y1}), wobei R die zuvor genannte Bedeutung hat und insbesondere für Wasserstoff steht. Beispiele für bevorzugte Verbindungen V^{y} sind insbesondere 1-Hydroxymethyl-4,5-dihydroxyimidazolidin-2-on, 1-Hydroxymethylharnstoff, 1-Hydroxy-methylimidazolidin-2-on und 1-Hydroxymethyl-3-methyl-4,5-dihydroxyimidazolidin-2-on, und speziell 1-Hydroxymethyl-4,5-dihydroxyimidazolidin-2-on. Die Verbindungen V^{y} können auch als Mischung mit den Verbindungen V^{x}, deren Präkondensaten β und deren Umsetzungsprodukten γ eingesetzt werden.

Als vernetzbare Stickstoffverbindungen sind auch Mischungen der Verbindungen der Gruppen α), β und/oder γ) untereinander geeignet. Hierzu zählen insbesondere Mischungen von Harnstoffderivaten V^{x1} und/oder V^{y1} wie zuvor genannt, die an einem oder beiden Stickstoffatom(en) der Harnstoffeinheit eine Gruppe der Formel CH₂OR tragen, mit Melaminverbindungen, die im Mittel an wenigstens 2 und vorzugsweise an jeder Aminogruppe des Melamins wenigstens eine Gruppe der Formel CH₂OR tragen.

Hierzu zählen insbesondere auch Mischungen von HarnstoffderivatenV^{x1}, mit Verbindungen V^{y}, insbesondere mit Harnstoffderivaten V^{y1}, die an einem der beiden Stickstoffatome der Harnstoffeinheit eine Gruppe der Formel CH₂OR tragen. In diesen Mischungen ist das Mengenverhältnis von Verbindung V^{x1}, bzw. dem Präkondensat von V^{x1} oder dem Umsetzungsprodukt von V^{x1}, zu der Verbindung V^{y} in der Regel so gewählt, dass das Gewichtsverhältnis im Bereich von 9:1 bis 1:9, insbesondere im Bereich von 4:1 bis 1:4 und speziell im Bereich von 1:2 bis 2:1 liegt.

Als vernetzbare Stickstoffverbindungen sind auch Mischungen wenigstens einer Verbindung, die aus den Gruppen α), β) und/oder γ) und insbesondere aus der Gruppe V und speziell aus der Gruppe V^{x} und V^{y} ausgewählt ist, mit wenigstens einer an sich nicht vernetzbaren Stickstoffverbindung geeignet. Hierzu zählen Verbindungen V', die wenigstens eine freie NH-Gruppe aufweisen, sowie Verbindungen V", die wenigstens eine OH-Gruppe aufweisen, die nicht in Form einer Gruppe CH₂OH vorliegt.. In diesen Mischungen gilt für die Bevorzugungen in den Gruppen α), β) und γ) das zuvor Gesagte.

In den Verbindungen V' ist die NH-Gruppe Bestandteil einer Amidgruppe und insbesondere einer Harnstoffgruppe. Dementsprechend sind bevorzugte Verbindungen V' Amide und insbesondere Harnstoffderivate, die gegebenenfalls an einem der beiden Stickstoffatome eine Gruppe der Formel CH₂OR oder einen C₁-C₄-Alkylrest tragen können, wobei R die zuvor genannten Bedeutungen aufweist.

Beispiele für bevorzugte Verbindungen V' sind Harnstoffverbindungen wie Harnstoff, N-Methylharnstoff, Ethylenharnstoff (Imidazolin-2-on), Propylenharnstoff, 4,5-Bishydroxyimidazolin-2-on, N-Methyl-4,5-bishydroxyimidazolin-2-on oder N-Methylimidazolin-2-on, sowie Amide wie Acetamid, Propionamid, Butyramid, Pyrrolidon, Piperidin-2-on, Caprolactam und dergleichen.

Beispiele für bevorzugte Mischungen dieses Typs sind Mischungen von
a) wenigstens einer vernetzbaren Stickstoffverbindung, die ausgewählt ist unter a1) Melaminverbindungen, die im Mittel an wenigstens 2 und vorzugsweise an jeder Aminogruppe des Melamins wenigstens eine Gruppe der Formel CH₂OR tragen,
   wobei R die zuvor genannte Bedeutung hat und insbesondere für Wasserstoff oder Methyl steht, a2) Harnstoffderivaten V^{x1} und a3) Harnstoffderivaten V^{y1}; mit
b) wenigstens einer unter Harnstoff, N-Methylharnstoff, Ethylenharnstoff (Imidazolin-2-on), Propylenharnstoff, 4,5-Bishydroxyimidazolin-2-on und N-Methyl-4,5-bishydroxyimidazolin-2-on ausgewählten Verbindung V'.

Die Verwendung derartiger Mischungen führt zu einer Verringerung der Formaldehyd-Emission des behandelten Lignocellulosematerials. Um eine hohe Fixierung zu gewährleisten, hat es sich jedoch bewährt, diese Verbindungen V' nur in untergeordneter Menge einzusetzen. Daher ist in diesen Mischungen der wenigstens einen vernetzbaren Stickstoffverbindung (insbesondere eine Verbindung V) mit der wenigstens einen Verbindung V' das Mengenverhältnis von Verbindung V, bzw. dem Präkondensat von V oder dem Umsetzungsprodukt von V, zu der Verbindung V' vorzugsweise so gewählt, dass das Molverhältnis der Gruppen CH₂OR zu den freien NH-Gruppen wenigstens 2:1, insbesondere wenigstens 3:1 und besonders bevorzugt wenigstens 5:1 oder gar 10:1 beträgt, d.h. die Gruppen CH₂OR liegen im Überschuss vor. Vorzugsweise liegt das Molverhältnis im Bereich von 1000:1 bis 2:1, insbesondere im Bereich von 500:1 bis 3:1, besonders bevorzugt im Bereich von 300:1 bis 5:1 und speziell im Bereich von 200:1 bis 10:1.

In den Verbindungen V" ist die OH-Gruppe vorzugsweise Bestandteil einer Halbaminalgruppe, wobei das Stickstoffatom seinerseits insbesondere Bestandteil einer Amidgruppe oder einer Harnstoffgruppe ist. Dementsprechend sind bevorzugte Verbindungen V" Amide und insbesondere Harnstoffderivate, die an wenigstens einem der Stickstoffatome der Amid- bzw. der Harnstoff-Gruppe ein sekundäres oder tertiäres Kohlenstoffatom tragen, das seinerseits eine OH-Gruppe trägt.

Beispiele für bevorzugte Verbindungen V" sind 4,5-Bishydroxyimidazolin-2-on, N-Methyl-4,5-bishydroxyimidazolin-2-on, 1,3-Dimethyl-4,5-bishydroxyimidazolin-2-on und dergleichen.

Beispiele für bevorzugte Mischungen dieses Typs sind Mischungen von
a) wenigstens einer vernetzbaren Stickstoffverbindung, die ausgewählt ist unter a1) Melaminverbindungen, die im Mittel an wenigstens 2 und vorzugsweise an jeder Aminogruppe des Melamins wenigstens eine Gruppe der Formel CH₂OR tragen, wobei R die zuvor genannte Bedeutung hat und insbesondere für Wasserstoff oder Methyl steht, a2) Harnstoffderivaten V^{x1} und a3) Harnstoffderivaten V^{y1}; mit
b) wenigstens einer unter 4,5-Bishydroxyimidazolin-2-on, N-Methyl-4,5-bishydroxyimidazolin-2-on und 1,3-Dimethyl-4,5-bishydroxyimidazolin-2-on ausgewählten Verbindung V".

In den Mischungen der wenigstens einen vernetzbaren Stickstoffverbindung (insbesondere eine Verbindung V) mit der wenigstens einen Verbindung V" ist das Mengenverhältnis von Verbindung V, bzw. dem Präkondensat von V oder dem Umsetzungsprodukt von V, zu der Verbindung V" in der Regel so gewählt, dass das Gewichtsverhältnis im Bereich von 9:1 bis 1:9, insbesondere im Bereich von 4:1 bis 1:4, und speziell im Bereich von 1:2 bis 2:1 liegt. Durch den Einsatz von Mischungen, die wenigstens eine Verbindung V" enthalten, gelingt eine weitere Absenkung des Wertes für die Formaldehydemission bei einer nur geringen oder nicht vorhandenen schlechteren Fixierung der Stickstoffverbindung im Lignocellulosematerial. Insbesondere wird das Quell-Schwindverhalten nicht nachteilig beeinflusst.

Vorteilhaft sind weiterhin Mischungen, die neben der vernetzbaren Stickstoffverbindung sowohl wenigstens eine Verbindung V' als auch eine Verbindung V" enthalten. Bezüglich der Bevorzugungen der vernetzbaren Stickstoffverbindungen V sowie der Verbindungen V' und V" gilt das zuvor Gesagte analog. In diesen Mischungen ist das Mengenverhältnis von Verbindung V, bzw. dem Präkondensat von V oder dem Umsetzungsprodukt von V, zu der Gesamtmenge an Verbindung V' und V" in der Regel so gewählt, dass das Gewichtsverhältnis im Bereich von 9:1 bis 1:9, insbesondere im Bereich von 4:1 bis 1:4, und speziell im Bereich von 1:2 bis 2:1 liegt.

Wässrige Zusammensetzungen von Verbindungen V, deren Präkondensaten und deren Umsetzungsprodukten sind an sich bekannt, beispielsweise aus WO 2004/033171, WO 2004/033170, K. Fisher et al. "Textile Auxiliaries - Finishing Agents" Kap. 7.2.2 in Ullmann's Encyclopedia of Industrial Chemistry, 5th Ed. on CD-ROM, Wiley-VCH, Weinheim 1997 und dort zitierte Literatur, US 2,731,364, US 2,930,715, H. Diem et al. "Amino-Resins" Kap. 7.2.1 und 7.2.2 in Ullmann's Encyclopedia of Industrial Chemistry, 5th Ed. on CD-ROM, Wiley-VCH, Weinheim 1997 und dort zitierte Literatur, Houben-Weyl E20/3, S. 1811-1890, und werden üblicherweise als Vernetzer für das Textilfinishing eingesetzt. Umsetzungsprodukte von N-methylolierten Harnstoffverbindungen V mit Alkoholen, z. B. modifiziertes 1,3-Bis(hydroxymethyl)-4,5-dihydroxyimidazolidinon-2 (mDMDHEU) sind beispielsweise aus der US 4,396,391 und der WO 98/29393 bekannt. Im Übrigen sind Verbindungen V sowie ihre Umsetzungsprodukte und Präkondensate im Handel erhältlich, beispielsweise unter den Handelsbezeichnungen Fixapret® CP und Fixapret® ECO der BASF Aktiengesellschaft und die Kauramin®-marken (z.B. Kauramin 650 Pulver) und die Luwipal®-Marken der BASF. Mischungen wenigstens einer unter Verbindungen V, deren Präkondensaten oder deren Umsetzungsprodukten ausgewählten Verbindung mit wenigstens einer Verbindung V' und/oder V" können beispielsweise durch Einarbeiten einer Verbindung V' bzw. V" in eine handelsübliche wässrige Zusammensetzung der Verbindung V, eines Präkondensats von V oder eines Umsetzungsprodukts von V hergestellt werden.

In einer Ausführungsform der Erfindung ist die vernetzbare Stickstoffverbindung unter einem mit einem C₁-C₆-Alkanol, einem C₂-C₆-Polyol und/oder einem Polyalkylenglykol modifizierten 1,3-Bis(hydroxymethyl)-4,5-dihydroxyimidazolidin-2-on ausgewählt (mDMDHEU). Beispiele für Polyalkylenglykole sind insbesondere die unten genannten Oligo-und Poly-C₂-C₄-alkylenglykole. Bei mDMDHEU handelt es sich Umsetzungsprodukte von 1,3-Bis(hydroxymethyl)-4,5-dihydroxyimidazolidinon-2 mit einem C₁-C₆-Alkanol, einem C₂-C₆-Polyol, einem Oligoethylenglykol oder Gemischen dieser Alkohole. Geeignete C₁₋₆-Alkanole sind beispielsweise Methanol, Ethanol, n-Propanol, iso-Propanol, n-Butanol und n-Pentanol, bevorzugt ist Methanol. Geeignete Polyole sind Ethylenglykol, Diethylenglykol, 1,2-und 1,3-Propylenglykol, 1,2-, 1,3-, und 1,4-Butylenglykol und Glycerin. Beispiele für geeignete Polyalkylenglykole sind insbesondere die im Folgenden genannten Oligo- und Poly-C₂-C₄-alkylenglykole. Zur Herstellung von mDMDHEU werden DMDHEU mit dem Alkanol, dem Polyol oder dem Polyalkylenglykol gemischt. Hierbei werden der einwertige Alkohol, das Polyol, oder das Oligo- bzw. Polyalkylenglykol üblicherweise in einem Verhältnis von je 0,1 bis 2,0, insbesondere 0,2 bis 2 Moläquivalenten, bezogen auf DMDHEU, eingesetzt. Die Mischung aus DMDHEU, dem Polyol oder dem Polyalkylenglykol wird üblicherweise in Wasser bei Temperaturen von vorzugsweise 20 bis 70 °C und einem pH-Wert von vorzugsweise 1 bis 2,5 umgesetzt, wobei der pH-Wert nach der Umsetzung in der Regel auf einen Bereich von 4 bis 8 eingestellt wird.

In einer weiteren Ausführungsform der Erfindung ist die in Schritt a) eingesetzte vernetzbare Stickstoffverbindung unter wenigstens 2-fach, z.B. 2-, 3-, 4-, 5- oder 6-fach, speziell einem 3-fach methyloliertem Melamin (Poly(hydroxymethyl)melamin) und einem mit einem C₁-C₆-Alkanol, einem C₂-C₆-Polyol und/oder einem Polyalkylenglykol modifizierten Poly(hydroxymethyl)melamin ausgewählt. Beispiele für Polyalkylenglykole sind insbesondere die im Folgenden genannten Oligo- und Poly-C₂-C₄-alkylenglykole. Die üblicherweise zur Modifizierung eingesetzten wässrigen Zusammensetzungen können auch einen oder mehrere der vorgenannten Alkohole, C₁-C₆-Alkanole, C₂-C₆-Polyole, Oligo- und Polyalkylenglykole oder Gemische dieser Alkohole enthalten. Geeignete C₁-₆-Alkanole sind beispielsweise Methanol, Ethanol, n-Propanol, iso-Propanol, n-Butanol und n-Pentanol, bevorzugt ist Methanol. Geeignete Polyole sind Ethylenglykol, Diethylenglykol, 1,2- und 1,3-Propylenglykol, 1,2-, 1,3-, und 1,4-Butylenglykol und Glycerin. Geeignete Oligo- und Polyalkylenglykole sind insbesondere Oligo- und Poly- C₂-C₄-alkylenglykole, speziell Homo- und Cooligomere des Ethylenoxids und/oder des Propylenoxids, die gegebenenfalls in Gegenwart von niedermolekularen Startern, z.B. aliphatischen oder cycloaliphatischen Polyolen mit wenigstens 2 OH-Gruppen wie 1,3-Propandiol, 1,3- und 1,4-Butandiol, 1,5-Pentandiol, 1,6-Hexandiol, Glycerin, Trimethylolethan, Trimethylolpropan, Erythrit, und Pentaerythrit, sowie Pentite und Hexite wie Ribit, Arabit, Xylit, Dulcit, Mannit und Sorbit sowie Inosit oder aliphatischen oder cycloaliphatischen Polyaminen mit wenigstens 2-NH₂-Gruppen wie Diethylentriamin, Triethylentetramin, Tetraethylenpentamin, Propylendiamin-1,3, Dipropylentriamin, 1,4,8-Triazaoctan, 1,5,8,12-Tetraazadodecan, Hexamethylendiamin, Dihexamethylentriamin, 1,6-Bis-(3-aminopropylamino)hexan, N-Methyldipropylentriamin oder Polyethylenimin erhältlich sind, worunter Diethylenglykol, Triethylenglykol , Di-, Tri- und Tetrapropylenglykol, sowie niedermolekulare Pluronic®-Marken der BASF (z.B. Pluronic® PE 3100, PE 4300, PE 4400, RPE 1720, RPE 1740) bevorzugt sind.

Die Konzentration der vernetzbaren Stickstoffverbindungen in der wässrigen Zusammensetzung liegt üblicherweise im Bereich 1 bis 60 Gew.-%, häufig im Bereich von 10 bis 60 Gew.-% und insbesondere im Bereich von 15 bis 55 Gew.-%, bezogen auf das Gesamtgewicht der Zusammensetzung. Sofern die wässrige Zusammensetzung einen der vorgenannten Alkohole enthält, liegt dessen Konzentration vorzugsweise im Bereich von 1 bis 50 Gew.-%, insbesondere im Bereich von 5 bis 40 Gew.-%. Die Gesamtmenge an vernetzbarer Verbindung und Alkohol macht üblicherweise 10 bis 60 Gew.-% und insbesondere 20 bis 50 Gew.-% des Gesamtgewichts der wässrigen Zusammensetzung aus.

In der Regel enthält die in Schritt a) zur Modifizierung eingesetzte wässrige Zusammensetzung wenigstens einen Katalysator K, welcher die Vernetzung der Stickstoffverbindung bewirkt. In der Regel sind als Katalysatoren K Metallsalze aus der Gruppe der Metallhalogenide, Metallsulfate, Metallnitrate, Metallphosphate, Metalltetrafluoroborate; Bortrifluorid; Ammoniumsalze aus der Gruppe der Ammoniumhalogenide, Ammoniumsulfat, Ammoniumoxalat und Diammoniumphosphat; organischen Carbonsäuren, organischen Sulfonsäuren, anorganische Brönsted-Säuren wie Borsäure, Phosphorsäure, Schwefelsäure und Salzsäure geeignet.

Beispiele für als Katalysatoren K geeignete Metallsalze sind insbesondere Magnesiumchlorid, Magnesiumsulfat, Zinkchlorid, Lithiumchlorid, Lithiumbromid, Aluminiumchlorid, Aluminiumsulfat, Zinknitrat und Natriumtetrafluoroborat.

Beispiele für als Katalysatoren K geeignete Ammoniumsalze sind insbesondere Ammoniumchlorid, Ammoniumsulfat, Ammoniumoxalat und Diammoniumphosphat.

Als Katalysatoren K sind insbesondere auch wasserlösliche organische Carbonsäuren wie Maleinsäure, Ameisensäure, Zitronensäure, Weinsäure und Oxalsäure,weiterhin Benzolsulfonsäuren, wie p-Toluolsulfonsäure, aber auch anorganische Säuren, wie Salzsäure, Phosphorsäure, Schwefelsäure, Borsäure oder deren Gemische geeignet.

Vorzugsweise ist der Katalysator K unter Magnesiumchlorid, Zinkchlorid, Magnesiumsulfat, Aluminiumsulfat oder deren Gemischen ausgewählt, wobei Magnesiumchlorid besonders bevorzugt ist.

Den Katalysator K wird man üblicherweise der wässrigen Zusammensetzung erst kurz vor dem Modifizierverfahren zusetzen. Er wird üblicherweise in einer Menge von 1 bis 20 Gew.-%, insbesondere 2 bis 10 Gew.-%, bezogen auf das Gesamtgewicht der in der wässrigen Zusammensetzung enthaltenen härtbaren Bestandteile eingesetzt. Die Konzentration des Katalysators, bezogen auf das Gesamtgewicht der wässrigen Dispersion, liegt üblicherweise im Bereich von 0,1 bis 10 Gew.-% und insbesondere im Bereich von 0,5 bis 5 Gew.-%.

Weiterhin kann die zur Modifizierung des Holzes eingesetzte Zusammensetzung einen oder mehrere Effektstoff, beispielsweise ein Farbmittel, z.B. einen Farbstoff oder ein Pigment, einen UV-Stabilisator, ein Antioxidationsmittel, ein Fungizid und/oder Insektizid und dergleichen enthalten, wie in der PCT/EP2006/004019 (ältere deutsche Patentanmeldung 102005020386.8) beschrieben, auf deren Inhalt hiermit Bezug genommen wird. Die Konzentration an Effektstoff liegt je nach Effektstoff im Bereich von 0,01 bis 60 Gew.-% und insbesondere 0,1 bis 25 Gew.-%, bezogen auf das Gewicht der Zusammensetzung.

Weiterhin kann die zur Imprägnierung des Lignocellulosematerials in Schritt a) eingesetzte Zusammensetzung einen oder mehrere hydrophobe Bestandteile, beispielsweise wenigstens ein Wachs oder ein Öl in emulgierter bzw. suspendierter Form enthalten, wie in den PCT/EP2006/004014 und PCT/EP2006/004016 (ältere deutsche Patentanmeldungen DE 102005020389.2 und DE 102005020390.6) beschrieben, auf deren Inhalt hiermit Bezug genommen wird. Die Konzentration an hydrophobem Bestandteil liegt typischerweise im Bereich von 0,01 bis 60 Gew.-% und insbesondere 0,1 bis 25 Gew.-%, bezogen auf das Gewicht der Zusammensetzung.

Das Imprägnieren kann in an sich üblicher Weise erfolgen, z.B. durch Tauchen, durch Anwendung von Vakuum gegebenenfalls in Kombination mit erhöhtem Druck oder durch konventionelle Auftragungsverfahren wie Streichen, Besprühen und dergleichen. Das jeweils angewendete lmprägnierverfahren hängt naturgemäß von den Abmessungen des zu imprägnierenden Materials ab. Lignocellulosematerialien mit geringen Abmessungen wie Späne oder Strands sowie dünne Furniere, d.h. Materialien mit einem großen Verhältnis von Oberfläche zu Volumen, lassen sich mit geringem Aufwand, z.B. durch Tauchen oder Besprühen imprägnieren, wohingegen Lignocellulosematerialien mit größeren Abmessungen, insbesondere Materialien, deren geringste Ausdehnung mehr als 5 mm beträgt, z.B. Vollholz, Formteile aus Vollholz oder Holzmaterialien, unter Anwendung von Druck oder Vakuum, insbesondere durch kombinierte Anwendung von Druck und Vakuum imprägniert werden. Vorteilhafterweise wird das Imprägnieren bei einer Temperatur unterhalb 50 °C, z.B. im Bereich von 15 bis 50 °C durchgeführt.

Die Bedingungen des Imprägnierens werden in der Regel so gewählt werden, dass die aufgenommene Menge an härtbaren Bestandteilen aus der wässrigen Zusammensetzung der gewünschten Beladung an Stickstoffverbindung, entsprechend einem bestimmten Stickstoffgehalt, entspricht. In der Regel beträgt die aufgenommene Menge an härtbaren Bestandteilen wenigstens 5 Gew.-%, bezogen auf die Trockenmasse des unbehandelten Materials. Die aufgenommene Menge an härtbaren Bestandteilen kann bis zu 100 Gew.-%, bezogen auf die Trockenmasse der unbehandelten Materialien betragen und liegt häufig im Bereich von 5 bis 60 Gew.-%, vorzugsweise im Bereich von 10 bis 50 Gew.-%, bezogen auf die Trockenmasse des eingesetzten unbehandelten Materials. Die Feuchte der zum Tränken eingesetzten, unbehandelten Materialien hängt von der Dimensionierung des Lignocellulosematerials ab und kann bei Materialien mit kleinen Abmessungen wie Furnieren und feinteiligen Materialien beispielsweise bis 100 % betragen. Vorzugsweise liegt die Feuchte unterhalb der Fasersättigung des Lignocellulosematerials. Häufig (insbesondere bei größerformatigen Materialien wie Vollholz) liegt sie im Bereich von 1 bis 50 % und insbesondere 5 bis 30 %. Hier und im Folgenden ist der Begriff "Feuchtigkeit" synonym mit dem Begriff Restfeuchtegehalt nach DIN 52183.

Zum Tauchen wird das Lignocellulosematerial, gegebenenfalls nach einer Vortrocknung, in einen Behälter, welcher die wässrige Zusammensetzung enthält, getaucht. Das Tauchen erfolgt vorzugsweise über einen Zeitraum von wenigen Sekunden bis 24 h, insbesondere 1 min bis 6 h. Die Temperaturen liegen üblicherweise im Bereich von 15 °C bis 50 °C. Hierbei nimmt das Lignocellulosematerial die wässrige Zusammensetzung auf, wobei durch die Konzentration an den nicht-wässrigen Bestandteilen (d. h. härtbaren Bestandteilen) in der wässrigen Zusammensetzung, durch die Temperatur und die Behandlungsdauer die von dem Holzmaterial aufgenommene Menge an diesen Bestandteilen gesteuert werden kann. Die tatsächlich aufgenommene Menge an Bestandteilen kann der Fachmann in einfacher Weise über die Gewichtszunahme des imprägnierten Materials und die Konzentration der Bestandteile in der wässrigen Zusammensetzung ermitteln und steuern. Furniere können beispielsweise mittels Pressrollen, sogenannter Kalander, die sich in der wässrigen Imprägnierzusammensetzung befinden, vorgepresst werden. Das beim Entspannen im Holz auftretende Vakuum führt dann zu einer beschleunigten Aufnahme an wässriger Imprägnierzusammensetzung.

Das Imprägnieren erfolgt vorteilhafterweise durch kombinierte Anwendung von vermindertem und erhöhtem Druck. Hierzu wird das Lignocellulosematerial, das in der Regel eine Feuchtigkeit im Bereich von 1 % bis 100 % aufweist, zunächst unter vermindertem Druck, der häufig im Bereich von 10 bis 500 mbar und insbesondere im Bereich von 40 bis 100 mbar liegt, mit der wässrigen Zusammensetzung in Kontakt gebracht, z. B. durch Tauchen in der wässrigen Zusammensetzung. Die Zeitdauer liegt üblicherweise im Bereich von 1 min bis 5 h. Hieran schließt sich eine Phase bei erhöhtem Druck, z. B. im Bereich von 2 bis 20 bar, insbesondere im 4 bis 15 bar und speziell 5 bis 12 bar, an. Die Dauer dieser Phase liegt üblicherweise im Bereich von 1 min bis 12 h. Die Temperaturen liegen üblicherweise im Bereich von 15 bis 50 °C. Hierbei nimmt das Lignocellulosematerial die wässrige Zusammensetzung auf, wobei durch die Konzentration an den nicht-wässrigen Bestandteilen (d. h. härtbaren Bestandteilen) in der wässrigen Zusammensetzung, durch den Druck, durch die Temperatur und die Behandlungsdauer die von dem Holzmaterial aufgenommene Menge an diesen Bestandteilen gesteuert werden kann. Die tatsächlich aufgenommene Menge kann auch hier über die Gewichtszunahme des Lignocellulosematerials berechnet werden.

Weiterhin kann das Imprägnieren durch konventionelle Verfahren zum Aufbringen von Flüssigkeiten auf Oberflächen erfolgen, z.B. durch Besprühen oder Rollen bzw. Streichen. Hierzu setzt man vorteilhafterweise ein Material mit einer Feuchtigkeit von nicht mehr als 50 %, insbesondere nicht mehr als 30 %, z.B. im Bereich von 12 % bis 30 % ein. Das Aufbringen erfolgt üblicherweise bei Temperaturen im Bereich von 15 bis 50 °C. Das Besprühen kann in üblicher Weise in allen für das Besprühen von flächigen oder feinteiligen Körpern geeigneten Vorrichtungen vorgenommen werden, z. B. mittels Düsenanordnungen und dergleichen. Beim Streichen bzw. Rollen wird die gewünschte Menge an wässriger Zusammensetzung mit Rollen oder Pinseln auf das flächige Material aufgetragen.

Vor der Behandlung mit überhitztem Wasserdampf kann das in Schritt a) erhaltene imprägnierte Lignocellulosematerial mechanisch von anhaftender Flüssigkeit befreit werden.

Die Behandlung des in Verfahrensschritt a) erhaltenen imprägnierten Lignocellulosematerials in Verfahrensschritt b) umfasst erfindungsgemäß eine Behandlung mit überhitztem Wasserdampf, im Folgenden auch als Heißdampf oder Trockendampf bezeichnet. Hierunter versteht man einen Wasserdampf, dessen Temperatur oberhalb, vorzugsweise wenigstens 5 K und insbesondere wenigstens 10 K oberhalb der Sättigungstemperatur des Wasserdampfes bei dem jeweils vorliegenden Druck liegt.

Die zur Erzeugung des überhitzten Wasserdampfs eingesetzte wässrige Flüssigkeit kann neben Wasser auch wassermischbare organische Flüssigkeiten umfassen. Der Anteil organischer Flüssigkeiten wird in der Regel nicht mehr als 10 Vol.-% ausmachen. Geeignete wassermischbare Flüssigkeiten sind Alkohole, wie C₁-C₈-Alkanole, z.B. Ethanol, n-Propanol, Isopropanol, n-Butanol, etc. Bevorzugt wird zur Heißdampferzeugung Wasser eingesetzt.

Zur Heißdampfbehandlung wird in der Regel eine Vorrichtung eingesetzt, welche die folgenden Einheiten umfasst:
- Dampferzeuger,
- Wärmetauscher,
- Behandlungskammer,
- gegebenenfalls Einheit zur Nachbehandlung des aus der Behandlungskammer austretenden Dampfes zur Verringerung einer Belastung mit organischen Stoffen.

Die Erzeugung von Heißdampf kann in dafür bekannten Dampferzeugern mit Wärmetauschern erfolgen. Auch kann man Nassdampf, d.h. gesättigten Dampf, in die Behandlungskammer einleiten und mittels in der Behandlungskammer angebrachter Wärmetauscher den Nassdampf überhitzen, d.h. in Heißdampf überführen. In chemischen Verbundstandorten mit Erdölveredlung steht überhitzter Wasserdampf aus anderen Prozessen, wie dem FCC-Prozess, der Methanolherstellung, etc. zur Verfügung.

Geeignete Behandlungskammem sind prinzipiell alle Behältnisse, die ein effektives Inkontaktbringen des Lignocellulasematerials mit dem Heißdampf ermöglichen und ein unkontrolliertes Austreten des Dampfes verhindern und ein kontrolliertes Ableiten von Dampf erlauben. In der Regel handelt es sich dabei um geschlossene Gefäße, die eine Zuleitung für den Dampf und eine Vorrichtung zum kontrollierten Druckausgleich aufweisen. Dazu zählen alle dem Fachmann bekannten Behältnisse zur Heißdampftrocknung von Holz. Für die Behandlung feinteiliger Lignocellulosematerialien, wie Fasern, Spänen, Strands, Chips, Schnitzel und dergleichen können die Behandlungskammern Vorrichtungen aufweisen, die eine mechanische Durchmischung des Lignocellulosematerials ermöglichen. Dazu zählen zB. röhrenförmige Kammern, die in Rotation versetzt werden können. Behandlungskammern für flächige und großformatige Lignocellulosematerialien, wie Furniere oder Teile aus Vollholz und Massivholz, können mit Einbauten versehen sein, die ein berührungsarmes oder berührungsfreies Anordnen der Materialien in der Kammer ermöglichen. Die Kammern können auch Vorrichtungen aufweisen, die ein verziehungsfreies Fixieren großformatiger Lignocellulosekörper ermöglichen. Daneben kann die Kammer noch Vorrichtungen zur Regelung des Drucks, der Temperatur und Vorrichtungen zur Kontrolle des Drucks, der Temperatur in der Kammer, der Nasstemperatur des Dampfs und/oder der Feuchte des Lignocellulosematerials aufweisen.

Der zur Behandlung eingesetzte Heißdampf weist eine Temperatur wenigstens 105 °C und insbesondere wenigstens 110°C auf. Die Temperatur wird in der Regel 200 °C, insbesondere 180 °C und besonders bevorzugt 150 °C nicht überschreiten.

In der Regel wird während der Heißdampibehandlung die Temperatur In der Kammer in den für die Heißdampftemperatur angegebenen Bereichen liegen. Vorzugsweise wird man während der Behandlung eine Nasstemperatur aufrechterhalten, die dem Siedepunkt der Flüssigkeit bei Umgebungsdruck entspricht, also etwa 100 °C.

In einer bevorzugten Ausführung erfolgt die Erzeugung des Heißdampfes in situ im Inneren der Behandlungskammer. Dazu wird die Kammer zunächst mit dem Lignocellulosematerial beschickt, und anschließend, während einer Aufheizphase, wird die Kammer mit nicht überhitztem Wasserdampf (Nassdampf) befüllt. Dazu wird beim Aufheizen der Kammer die relative Luftfeuchte bei etwa 100% konstant gehalten. Wird nach Erreichen einer Temperatur von etwa 100°C der Dampf durch weitere Zufuhr von Wärmeenergie weiter erhitzt, so entsteht Heißdampf. Unter diesen Bedingungen wird noch im Lignocellulosematerial befindliches Wasser in den gasförmigen Zustand überführt und durch den Druckunterschied zur Kammer erfolgt neben der Härtung/Vernetzung gleichzeitig der Transport der Feuchte aus dem Inneren des Holzes zur Holzoberfläche. In der Regel kann somit auch der Trocknungsprozess gegenüber einer herkömmlichen Trocknung verkürzt werden.

Die Geschwindigkeit der Härtung/Vernetzung und die Trocknungsgeschwindigkeit werden von der dem Lignocellulosematerial zugeführten Energie bestimmt. Diese Energiezufuhr wird u.a. durch die Differenz zwischen der Temperatur des zu behandelnden Lignocellulosematerials und der Temperatur des Heißdampfes bestimmt. Eine solche Temperaturdifferenz stellt sich immer ein, solange das Lignocellulosematerial noch nicht verdampftes Wasser enthält. Während der Trocknungsphase kann somit die optimale Trocknungsgeschwindigkeit über die Temperatur des Heißdampfes geregelt werden.

Der zur Behandlung eingesetzte Heißdampf weist vorzugsweise einen Druck im Bereich von 0,9 bis 5 bar auf und wird insbesondere einen Druck von 3 bar und insbesondere bevorzugt 2 bar nicht überschreiten.

Die Dauer der Heißdampfbehandlung in Schritt b) (bei wiederholter Behandlung mit Heißdampf die Gesamtdauer) liegt vorzugsweise im Bereich von 1 min bis 200 Stunden, besonders bevorzugt von 5 min bis 48 Stunden. Bei Furnieren und feinteiligen Lignocellulosematerialien können eher höhere Temperaturen und kürzere Zeiten angewendet werden.

Vorzugsweise wird die Heißdampfbehandlung so lange durchgeführt, bis die Restfeuchte im Lignocellulosematerial nicht mehr als 10 %, insbesondere nicht mehr als 8 % und speziell nicht mehr als 7 %, z.B. 2 bis 10 %, insbesondere 3 bis 8 % und speziell etwa 4 bis 7 % beträgt. Die Restfeuchte kann in üblicher Weise über Leitfähigkeitsmessungen bestimmt werden

Der Einsatz von Heißdampf weist die folgenden Vorteile gegenüber herkömmlichen Verfahren auf:
- die erhaltenen Lignocellulosematerialien zeichnen sich durch hohe Fixierungsgrade aus,
- Heißdampf ermöglicht hohe Energieausbeuten bei der Vernetzung/Trocknung des Lignocellulosematerials, die durch Einsatz eines Energieverbunds mit weiteren energieverbrauchenden Schritten des erfindungsgemäßen Verfahrens (z.B. Erwärmung des Frischwassers in einem Wärmeaustauscher vor der eigentlichen Heißdampferzeugung oder einer weiteren Trocknung) oder anderer Verfahren noch gesteigert werden kann,
- geschlossene Trockenkreisläufe ermöglichen eine effektive Abgasbehandlung und eine Verringerung der Umweltbelastung.

In einer bevorzugten Ausführungsform umfasst Verfahrensschritt b) zusätzlich weiterhin wenigstens eine Behandlung des Lignocellulosematerials bei geringer Feuchte des umgebenden Gasraums (= Trockenbehandlung), die sich der Heißdampfbehandlung anschließt.

Häufig liegt die Temperatur bei der Trockenbehandlung oberhalb von 120 °C, vorzugsweise oberhalb von 130 °C, z.B. im Bereich von > 120 °C bis 200 °C und insbesondere im Bereich von 130 °C bis 160 °C. Geeignet ist auch der Einsatz eines Temperaturgradienten, z.B. durch Anlegen eines Temperaturprofils, das von 120 °C bis 200 °C, insbesondere von 130 °C bis 160 °C reichen kann. Diese Trockenbehandlung dient der Unterstützung der Trocknung und/oder Härtung. Überraschenderweise wurde gefunden, dass durch die erfindungsgemäße Kombination von Heißdampfbehandlung und Trockenbehandlung die Formaldehydemission der Lignocellulosematerialien, insbesondere auch bei hohen Stickstoffbeladungsgraden, verringert werden.

Bevorzugt führt man die Trockenbehandlung durch Inkontaktbringen des Lignocellulosematerials mit einem gasförmigen Medium durch, das eine relative Feuchte von höchstens 15%, insbesondere bevorzugt von höchstens 5 %, aufweist. Vorzugsweise bringt man das Lignocellulosematerial mit einem gasförmigen Medium in Kontakt, das ausgewählt ist unter Luft, Inertgasen, wie Stickstoff, Helium, Neon, Argon, etc. und Gemischen davon. Besonders bevorzugt wird Luft eingesetzt.

Die Dauer der Trockenbehandlungszeit wird in der Regel so gewählt, dass die Restfeuchte im Lignocellulosematerial nach beendeter Trockenbehandlung weniger als 8 %, z.B. 1 bis 8 %, insbesondere nicht mehr als 6 %, z.B. 1 bis 6 %, und speziell nicht mehr als 5 %, z.B 1 bis 5 % beträgt. Sie liegt typischerweise im Bereich von 1 min bis 24 Stunden, besonders bevorzugt 5 min bis 12 Stunden.

In der Regel erfolgt die Trockenbehandlung im Anschluss an die Behandlung mit Heißdampf. Gemäß einer ersten Ausführungsform wird man hierzu zunächst eine Heißdampfbehandlung in der oben beschriebenen Weise durchführen, bis der gewünschte Restfeuchtegehalt erreicht ist und anschließend eine Trockenbehandlung wie zuvor beschrieben durchführen. In einer weiteren Ausführungsform erfolgt die Trockenbehandlung intermittierend mit der Heißdampfbehandlung. Dazu kann das Lignocellulosematerial abwechselnd (gepulst) einer Behandlung mit Heißdampf und mit einem gasförmigen Medium mit geringerer relativer Feuchte, wie zuvor beschrieben, unterzogen werden. Dieser Wechsel zwischen Heißdampf und davon verschiedenem gasförmigem Medium kann z.B. unter Einsatz eines konventionellen Frischluft-Abluft-Systems erfolgen.

Durch die Trockenbehandlung erreicht man eine weitere Absenkung der Formaldehydemission auch bei hoher Beladung mit vernetzbaren Stickstoffverbindungen. Der Quotient (FA/N) aus Formaldehydemission (FA), bestimmt mittels der Flaschenmethode nach EN 717 Teil 3, und Mengenanteil der Stickstoffverbindung (N), gerechnet als Stickstoff und bezogen auf das Gesamtgewicht des Lignocellulosematerials, weist daher in den so erhältlichen Materialien in der Regel einen Wert von höchstens 5,0 x 10⁻³, insbesondere einen Wert von höchstens 3,5 x 10⁻³ und speziell einen Wert von höchstens 3,0 x 10⁻³ auf. Die Formaldehydemission (FA) in mg pro 100 g Lignocellulosematerial wird mittels der Flaschenmethode nach EN 717, Teil 3 bestimmt. In der Regel liegt der Wert für die Formaldehydemission des erfindungsgemäßen Lignocellulosematerials bei höchstens 15 mg/100 g, vorzugsweise bei höchstens 12 mg/100 g, besonders bevorzugt bei höchstens 10 mg/100 g und insbesondere bei höchstens 8 mg/100 g.

Außerdem kann in Schritt b) vor der Heißdampfbehandlung eine Vortrocknung durchgeführt werden. Vortrocknung bedeutet, dass das Lignocellulosematerial unter den Fasersättigungspunkt getrocknet wird, der je nach Art des Materials etwas variieren kann und typischerweise bei etwa 30 Gew.-% liegt. Hierbei werden die imprägnierten Lignocellulosematerialien wenigstens teilweise von flüchtigen Bestandteilen der in Schritt a) eingesetzten wässrigen Zusammensetzung, insbesondere von Wasser und/oder überschüssigen organischen Lösungsmitteln, befreit, welche in der Härtung/Vernetzung nicht reagieren. Die Vortrocknung wirkt zudem der Gefahr einer Rissbildung entgegen. Insbesondere bei kleinformatigen Materialien und Körpern, beispielsweise Furnieren, kann die Vortrocknung entfallen. Bei Lignocellulosekörpern mit größeren Abmessungen kann eine Vortrocknung jedoch von Vorteil sein. Sofern eine separate Vortrocknung durchgeführt wird, erfolgt diese vorteilhafterweise bei Temperaturen im Bereich von 20 bis 80°C. In Abhängigkeit von der gewählten Temperatur kann bei der Behandlung vor der Heißdampfbehandlung bereits eine teilweise oder vollständige Härtung/Vernetzung der in der Zusammensetzung enthaltenen härtbaren Bestandteile erfolgen. Bevorzugt ist, dass keine oder nur eine teilweise Härtung/Vernetzung vor der Heißdampfbehandlung erfolgt. Vorzugsweise erfolgt die Vorbehandlung in einer Weise, dass der Feuchtegehalt der Lignocellulose-Materialien nach der Vorbehandlung nicht mehr als 30%, insbesondere nicht mehr als 20 %, bezogen auf die Trockenmasse, beträgt. Der Feuchtegehalt kann durch die Temperatur, die Dauer und den bei der Vortrocknung gewählten Druck in einfacher Weise gesteuert werden und in üblicher Weise über Leitfähigkeitsmessungen bestimmt werden.

Die Vortrocknung des Lignocellulosematerials kann in einem konventionellen Frischluft-Abluft-System, z. B. einem Trommeltrockner durchgeführt werden.

Vortrocknung und/oder Trockenbehandlung des Lignocellulosematerials erfolgen vorzugsweise in derselben Vorrichtung, wie die Heißdampfbehandlung.

Die Lignocellulosematerialien können im Anschluss an das Imprägnieren in Schritt a), während oder im Anschluss an den Schritt b) einer Weiterverarbeitung unterzogen werden. Im Falle feinteiliger Materialen kann z.B. eine Weiterverarbeitung zu Formkörpern wie OSB (oriented structural board) Platten, Spanplatten, Wafer-Boards, OSL-Platten oder OSL-Formteilen (Oriented-Strand-Lumber), PSL-Platten oder PSL-Formteilen (Parallel-Strand-Lumber), Platten oder Formteilen aus Constructed Strand Lumber, SCL-Formteilen oder -Platten (Structural Composite Lumber), LSL-Formteilen oder -Platten (Laminated Strand Lumber), Dämmplatten und mitteldichten (MDF) und hochdichten (HDF) Faserplatten und dergleichen, im Falle von Furnieren zu Furnierwerkstoffen wie furnierten Faserplatten, furnierten Tischlerplatten, furnierten Spanplatten einschließlich furnierte OSB-, SCL-, OSL- und PSL-Platten, Sperrholz, Leimholz, Lagenholz, Furnierschichtholz (z. B. Kerto-Schichtholz), Multiplex-Platten, laminierten Furnierwerkstoffe (Laminated Veneer Lumber LVL), aber auch nichtflächigen dreidimensional geformten Bauteile wie Lagenholzformteilen, Sperrholzformteilen und anderen beliebigen, mit wenigstens einer Furnierlage beschichtete Formteilen erfolgen. Die Weiterverarbeitung kann unmittelbar im Anschluss an das Imprägnieren in Schritt a), während oder im Anschluss an den Schritt b) erfolgen. Bei Furnieren und Holzwerkstoffen umfasst die Weiterverarbeitung neben dem Härten und Verkleben, bzw. Formgeben zusätzlichen einen Beleimungsschritt. Wegen Details hierzu wird auf den Inhalt der PCT/EP 2006/001980 (DE 102005010041.4, Furnierwerkstoffe) und den Inhalt der PCT/EP 2006/001979 (DE 102005010042.2, Holzwerkstoffe) Bezug genommen. Im Falle von imprägnierten Furnieren wird man vorteilhafterweise die Weiterverarbeitung vor dem Härtungsschritt oder zusammen mit dem Härtungsschritt durchführen. Bei Holzwerkstoffen aus feinteiligen Materialien werden häufig der Formgebungsschritt und der Härtungsschritt gleichzeitig durchgeführt.

Die Verwendung von nach dem erfindungsgemäßen Verfahren erhaltenen modifizierten Lignocellulosematerialien, speziell von derart modifizierten Holzmaterialien, erlaubt die Herstellung von Gegenständen mit verbesserter mechanischer Festigkeit und verbesserter Witterungsbeständigkeit, insbesondere verminderter Rissbildung in denjenigen Bereichen, die aus dem Holzmaterial gefertigt sind und einer verringerten Anfälligkeit dieser Bereiche für einen Befall mit holzschädigenden Organismen wie holzzerstörenden Pilzen.

Die erfindungsgemäßen und nach dem erfindungsgemäßen Verfahren erhältlichen Lignocellulosematerialien und die daraus hergestellten Gegenstände können eine übliche Beschichtung, beispielsweise einen Lack, eine Lasur oder eine Beize aufweisen, wie in PCT/EP 2006/004020 (der älteren deutschen Patentanmeldung 102005020387.6) beschrieben, auf deren Inhalt hiermit Bezug genommen wird.

Insbesondere eignen sich die modifizierten Holzmaterialien zur Herstellung von Gegenständen, die aus mehreren, miteinander verbundenen Teilen gefertigt sind, wobei wenigstens ein Teil aus einem modifizierten Holzmaterial gefertigt ist, da aufgrund des verringerten Quell-/Schwind-Verhaltens des modifizierten Holzes die Verbindungen zwischen den verschiedenen Teilen stabiler sind und bei Witterungseinflüssen geringeren mechanischen Belastungen ausgesetzt sind und ihre Funktion besser beibehalten können. Dies gilt insbesondere dann, wenn die aus dem modifizierten Holzmaterial gefertigten Teile miteinander oder mit Teilen aus anderen Materialien zumindest teilweise kraftschlüssig verbunden sind. Aufgrund der verringerten Quell-Schwind-Neigung erfindungsgemäßer Holzmaterialien können zudem erstmalig witterungsbeständige Holzgegenstände hergestellt werden, in denen mehrere Holzarten mit unterschiedlichem Quell-Schwind-Verhalten miteinander durch eine stoffschlüssige Verbindung, z.B. eine Leimung oder eine kraftschlüssige Verbindung, einschließlich einer formschlüssigen Verbindung mit kraftschlüssigem Anteil verbunden sind, z.B. durch eine genagelte oder geschraubte Verbindung, durch Dübel, durch gezinkte Verbindungen, einschließlich Schwalbenschwanzverbindungen, durch gezapfte Verbindungen, durch Nut-und-Feder-Verbindungen, oder durch sonstige mechanische Verbindungen miteinander verbunden sind" da durch die erfindungsgemäße Behandlung eine Egalisierung des Quell-Schwind-Verhaltens erreicht wird

Insbesondere handelt es sich bei dem modifizierten Holzmaterial um Vollholz, d.h. um großformatige Materialien mit Abmessungen im Zentimeter oder Meterbereich, z.B. Bretter, Knüppelholz, Rundholz, Balken oder dergleichen.

Wie bereits oben erläutert, eignen sich erfindungsgemäß modifizierte. Holzmaterialien insbesondere zur Herstellung von Gegenständen, die mehrere miteinander verbundene Teile umfassen, wobei wenigstens ein Teil aus einem modifizierten Holzmaterial gefertigt ist. Sie eignen sich insbesondere zur Herstellung von Gegenständen, worin wenigstens zwei Teile des Gegenstandes kraftschlüssig miteinander verbunden sind,
wobei wenigstens ein Teil der miteinander kraftschlüssig verbundenen Teile aus einem modifizierten Holzmaterial gefertigt ist.

Aufgrund ihrer Unempfindlichkeit gegenüber Feuchtigkeitseinflüssen betrifft die Erfindung insbesondere auch die Verwendung modifizierter Holzmaterialien zur Herstellung von Gegenständen, die Feuchtigkeit oder Witterungsbedingungen ausgesetzt ist. Der Feuchtigkeitseinfluss kann ein Kontakt mit hoher Luftfeuchtigkeit sein, z.B. wenn sich die Gegenstände in Feuchträumen wie Badezimmern, Hallenbädern, Saunen, Waschküchen, im Inneren von Schiffen, und dergleichen befinden, oder aber auch wenn sie im Außenbereich hoher Luftfeuchtigkeit ausgesetzt sind. Der Feuchtigkeitskontakt kann auch ein Kontakt mit flüssigem Wasser oder mit stehender Nässe sein, z.B. durch Einwirkung von Regen, durch Kontakt mit Fluss- oder Seewasser, bei Bauwerken des Wasserbaus oder bei Schiffen.

Die Herstellung der Gegenstände kann in an sich bekannter Weise in Analogie zur Herstellung von Gegenständen aus Holzmaterialien erfolgen. Sie umfasst typische Maßnahmen der Holzbearbeitung wie Sägen, Schneiden, Hobeln, Fräsen, Schleifen, Bohren, Schrauben, Nageln, Kleben, Laminieren und dergleichen. In der Regel geht man bei der Herstellung der Gegenstände bereits von dem modifizierten Holzmaterial aus. Man kann aber auch den Gegenstand zunächst aus einem unmodifizierten Holzmaterial fertigen und anschließend die Holzbestandteile einer Modifizierung, wie oben beschrieben, unterwerfen.

In einer ersten Ausführungsform der Erfindung verwendet man das modifizierte Holzmaterial zur Herstellung von Bodenbelägen. Häufig setzt man hierzu Furnierwerkstoffe ein, in denen die dekorative, der Witterung ausgesetzte Oberfläche von einer erfindungsgemäß modifizierten Furnierschicht gebildet wird. Ein Beispiel hierfür ist Parkett, einschließlich Stabparkett, Massivparkett, Mosaikparkett, Hochkant-Lamellenparkett, Fertigparkett, z.B. 2-Schicht- oder 3-Schichtfertigparkett, Furnierböden und Sportböden, z.B. flächenelastische Sportböden und punktelastische Sportböden, sowie Parkettschwingböden. Erfindungsgemäß modifizierte Holzmaterialien sind auch zur Herstellung von Dielenparkett, Terrassenbelägen und dergleichen geeignet. Erfindungsgemäße Holzmaterialien sind auch zur Herstellung von Laminat geeignet, wobei das erfindungsgemäß modifizierte Holzmaterial dabei in der Regel die Pressholzschicht des Laminats bildet.

Eine weitere bevorzugte Ausführungsform der Erfindung betrifft einen Holzgegenstand, insbesondere ein Bodenbelagsmaterial, das aus wenigstens zwei miteinander verbundenen, insbesondere verleimten bzw. verklebten Hölzern besteht, wobei die Hölzer gleich oder verschieden sein können. Ein spezielle Ausführungsform der Erfindung betrifft ein Bodenbelagsmaterial für den Außen- und Nassbereich. Konventionelle Bodenbelagsmaterialien für den Außen- und Nassbereich sind typischerweise aus Hartholz gefertigte Dielen, Bohlen oder Bretter, die häufig noch mit einer Oberflächenstrukturierung versehen sind. Diese Bodenbeläge sind in der Regel aufgrund des hohen Preises der Harthölzer sehr teuer. Die Witterungs- bzw. Feuchtebeständigkeit ist nicht immer zufriedenstellend. Die erfindungsgemäßen Holzmaterialien erlauben nunmehr die Herstellung von Bodenbelägen mit hoher Dauerhaftigkeit auch aus preiswerten Hölzern wie Kiefer, Fichte, Buche, Pappel und dergleichen. Insbesondere erlauben die erfindungsgemäßen Holzmaterialien die Herstellung von Bodenbelagsmaterialien, die Trägerschicht aus einem ersten erfindungsgemäßen Holzmaterial und eine mit dem Trägermaterial verbundene, insbesondere verleimte bzw. verklebte Deckschicht bzw. Nutzschicht aus einem zweiten, Holzmaterial aufweisen. Bei dem Material der Trägerschicht handelt es sich vorzugsweise um ein erfindungsgemäßes Holzmaterial aus einer preiswerten Holzsorte, insbesondere um ein preiswertes Massivholz, beispielsweise um ein erfindungsgemäß behandeltes Kiefernholz. Vorzugsweise handelt es sich bei dem Holzmaterial der Nutzschicht ebenfalls um ein erfindungsgemäßes Holzmaterial, vorzugsweise um ein erfindungsgemäßes Holzmaterial mit einem dekorativen Aussehen, beispielsweise um erfindungsgemäß behandelte Buche. Die Nutzschicht kann aber auch aus einem unbehandelten oder einem erfindungsgemäß behandelten Hartholz, beispielsweise aus Hartholz der Dauerhaftigkeitsklassen 1 oder 1 wie Angelim, Bangkirai, Bongossi, Bilinga, Cumaru, Douglasie, Eukalyptus, Fava, Garapa, Ipe, Iroko, Itauba, Jatoba, Karri, Limbali, Massaranduba, Mukulungu, Okan, Piquia, Robinie, Tali, Tatajuba, Torrado oder Teak bestehen. Die Nutzschicht weist typischerweise eine Stärke (Dicke) von wenigstens 1 mm, z.B. 1 bis 10 mm, insbesondere 2 bis 8 mm, auf. Die Nutzschicht kann eine Profilierung, z.B. ein Rillenprofil aufweisen. Die Stärke der Trägerschicht hängt naturgemäß von der gewünschten Anwendung und der hierfür erforderlichen Stärke ab. Sie liegt typischerweise im Bereich von 5 bis 100 mm, insbesondere im Bereich von 10 bis 50 mm. Die Bodenbeläge können die Formen von Platten, Brettern, Dielen, Bohlen oder Grätings aufweisen. Die Bodenbeläge können Mittel zum Verbinden der einzelnen Elemente des Bodenbelags aufweisen, beispielsweise Nut- und Feder-Verbindungen, Klick-Verbindungen und dergleichen. Die Herstellung derartige Bodenbeläge erfolgt typischerweise durch Verleimen bzw. Verkleben der Trägerschicht mit der Nutzschicht in Analogie zu bekannten Verfahren zum Verleimen von Holzschichten, beispielsweise in Analogie zu Verfahren zur Herstellung von Lagenhölzern oder zur Herstellung von Bodenbelägen für den Innenbereich, die eine Trägerschicht und eine darauf angeordnete Nutzschicht aufweisen. Insbesondere kann die Herstellung in Analogie zu dem in PCT/EP2006/001980 beschriebenen Verfahren erfolgen, wobei abweichend von dem dort beschriebenen Verfahren erfindungsgemäß behandelte Holzmaterialien miteinander verklebt bzw. verleimt werden.

In einer weiteren Ausführungsform der Erfindung verwendet man das modifizierte Holzmaterial zur Herstellung von Türen und Türzargen, beispielsweise für Innentüren aber auch für Haustüren. Das modifizierte Holzmaterial kann sowohl für das Türblatt selber, für Teile des Türblatts, z.B. in Form von Vollholz- oder Holzwerkstoffplatten für den Innenaufbau des Türblatts oder in Form eines Furniers für die Dekorschicht auf dem Türblatt eingesetzt werden.

In einer weiteren Ausführungsform der Erfindung verwendet man das modifizierte Holzmaterial zur Herstellung von Fenstern, z.B. von Fensterrahmen und/oder Fensterflügeln. Die Fensterrahmen und Fensterflügel können aus dem gleichen Holz aber auch aus verschiedenen Holzarten gefertigt sein. Ebenfalls ist es möglich, dass der Rahmen aus einem von Holz verschiedenen Material gefertigt ist und nur die Fensterflügel aus einem erfindungsgemäß modifizierten Holzmaterial gefertigt sind. Die erfindungsgemäß modifizierten Holzmaterialien können auch zur Herstellung von Fensterbrettern eingesetzt werden.

In einer weiteren Ausführungsform der Erfindung verwendet man das modifizierte Holzmaterial zur Herstellung von Möbeln, insbesondere von solchen Möbeln oder Möbelteilen, die typischerweise aus Holz oder Holzmaterialien gefertigt sind. Hierzu zählen Schränke oder Teile von Schränken wie der Korpus, die Türen oder Böden, Regale, Bettgestelle, Lattenroste, Sofagestelle, Stühle, Tische, oder Teile dieser Möbel wie Tischuntergestelle, Tischplatten, Arbeitsplatten, insbesondere Küchenarbeitsplatten, Badezimmermöbel und dergleichen. Die erfindungsgemäß modifizierten Holzmaterialien sind insbesondere für Möbel geeignet, die in verstärktem Maße Feuchtigkeit oder Witterung ausgesetzt sind, z.B. für die Herstellung von Küchenmöbel, Badezimmermöbel oder für die Herstellung von Gartenmöbeln, Parkbänken, Stadionsitze und dergleichen geeignet.

In einer weiteren Ausführungsform der Erfindung verwendet man das modifizierte Holzmaterial zur Herstellung von Gegenständen für den Wasserbau, z.B. für Uferbefestigungen, Wasserbauwerke wie Schleusen, insbesondere Schleusentore, Wasserräder, Plattformen. Pontons, Stege und sonstige Konstruktionen in und am Wasser.

In einer weiteren Ausführungsform der Erfindung verwendet man das modifizierte Holzmaterial für den Bau von Gebäuden oder Gebäudeteilen. Hierzu zählen neben dem bereits genannten Fensterbau insbesondere die Verwendung modifizierter Holzmaterialien in Form von Konstruktionshölzern für den Bau von Holzhäusern, für den Fachwerkbau, für den Bau von Dachkonstruktionen, für den Bau von Gebäuden in Holzständerbauweise, für den Bau von Brücken oder Aussichtsplattformen, Carports sowie für Gebäudeteile wie Terrassen, Balkone, Balkongeländer, Dachgauben und dergleichen. Hierzu zählt weiterhin die Verwendung modifizierter Holzmaterialien für den Bau von Treppen einschließlich Treppenstufen, z.B. bei Holzstufen bei Metalltreppenkonstruktionen, aber auch für vollständig aus Holzmaterialien gefertigte Treppen und Geländer.

In einer weiteren Ausführungsform der Erfindung verwendet man das modifizierte Holzmaterial für den Fassadenbau. Das modifizierte Holzmaterial kann dabei sowohl Bestandteil der Fassadenunterkonstruktion sein als auch den sichtbaren Teil der Fassade bilden, z.B. in Form von Fassadenplatten aus dem modifizierten Holzmaterial, Fassadenbretter aus modifiziertem Holz, Schindeln aus modifiziertem Holz und dergleichen.

In einer weiteren Ausführungsform der Erfindung verwendet man das modifizierte Holzmaterial für die Herstellung von Wandelementen und Deckenelementen, beispielsweise Paneele, Nut und Feder-Bretter, Kassetten-Decken, aber auch Deckenabhängungen, mobile Wände oder Wandelemente in Ständerbauweise, Decken- und Wandverkleidungen. Hiefür kommen insbesondere Holzwerkstoffe auf Basis feinteiliger Materialien in Form von Platten in Betracht, beispielsweise OSB-Platten, Spanplatten, OSL-Platten, PSL-Platten, Dämmplatten und mitteldichte (MDF) und hochdichte (HDF) Faserplatten und dergleichen sowie Furnierwerkstoffe wie furnierte Faserplatten, furnierte Tischlerplatten, furnierte Spanplatten, einschließlich furnierter OSL- und PSL-Platten, Sperrholz, Leimholz, Lagenholz, Furnierschichtholz (z. B. Kerto-Schichtholz) in Betracht.

In einer weiteren Ausführungsform der Erfindung verwendet man das modifizierte Holzmaterial für den Gartenbau, beispielsweise für die Herstellung von Zäunen, Palisaden, Sichtschutzelementen, Gartenhäuser, Pergolas, Vogelhäusern und dergleichen.

In einer weiteren Ausführungsform der Erfindung verwendet man das modifizierte Holzmaterial für die Herstellung von Spielgeräten für den Außenbereich, beispielsweise für Klettergerüste, Schaukeln, insbesondere Schaukelgerüste und Schaukelsitze und - bretter, Spiellandschaften mit Vorrichtungen zum Klettern, Schaukeln und/oder Rutschen, für Gerüste von Seilbahnen und dergleichen.

In einer weiteren Ausführungsform der Erfindung verwendet man das modifizierte Holzmaterial für die Herstellung von Haushaltsartikeln, beispielsweise für Messerblöcke, Brotkästen, Holzschüsseln, Badezubehör wie Badezuber, Bürsten und dergleichen, weiterhin für Schneidbretter, Kochbesteck wie Kochlöffel, Pfannenwender, Nudelhölzer, Salatbesteck, Nudelgabeln und dergleichen.

In einer weiteren Ausführungsform der Erfindung verwendet man das modifizierte Holzmaterial für den Bootsbau, sowohl für den Bau von Rümpfen, z.B. für die Beplankung, für Spanten und Kiel, für Motorenlager, für stehendes Gut wie Masten, Spieren, aber auch für Decksaufbauten, Decksbeplankung, und sonstige außenliegende Vorrichtungen wie Grätings, Klampen, Ruderrad, Instrumententafeln, und dergleichen sowie für den Innenausbau von Schiffen z.B. für Schrankeinbauten, Kojeneinbauten, Kabinenwände- und Türen, Motorverkleidungen, Niedergänge, Leitern und dergleichen.

In einer weiteren Ausführungsform der Erfindung verwendet man das modifizierte Holzmaterial für den Saunabau, beispielsweise für Wände, Türen, Bänke, Ofenverkleidungen und dergleichen.

In einer weiteren Ausführungsform der Erfindung verwendet man das modifizierte Holzmaterial im Fahrzeugbau, beispielsweise für Innenverkleidungen des Fahrgastraums, des Kofferraums und Motorraumverkleidungen, weiterhin Dämmungen, beispielsweise des Motorraums und des Kofferraums, weiterhin für Armaturentafeln Holzdekors und dergleichen.

In einer weiteren Ausführungsform der Erfindung verwendet man das modifizierte Holzmaterial für die Herstellung von Spielzeug wie Bauklötze, Kugelbahnen, Spielzeughäuser und Spielzeugeinrichtungen wie Puppenhäuser, Puppenküchen und dergleichen, Spielzeugautos, -flugzeuge und -schiffe, für den Modellbau, wie Modellbauautos, -flugzeuge und -schiffe, Spielgeräte wie Schläger, Schlägerrahmen und dergleichen.

In einer weiteren Ausführungsform der Erfindung verwendet man das modifizierte Holzmaterial für die Herstellung von Musikinstrumenten insbesondere für den Bau von Saiteninstrumenten wie Gitarren, Lauten, Harfen, Geigen, Violas, Violoncelli, Kontrabässen oder Teilen davon wie Stegen, Korpusse, Schnecken, Wirbeln, weiterhin für den Bau von Holzblasinstrumenten, wie Klarinetten, Oboen, Fagotten, Blockflöten etc oder für den Bau von Orgeln, speziell für Holzpfeifen, sowie für den Bau von Klavieren und Flügeln.

In einer weiteren Ausführungsform der Erfindung verwendet man das modifizierte Holzmaterial für die Herstellung von Sportgeräten, insbesondere solcher Sportgeräte, die typischerweise aus Holz oder Holzmaterialien gefertigt werden, aber auch für Sportgeräte, in denen Holz aus gründen seiner mangelnden Festigkeit und Härte bislang nicht eingesetzt wurde. Zu nennen sind beispielsweise Schläger, wie Hockey- und Eishockey-Schläger, Wurfgeräte wie Speere und Diskus, Ruder und Skulls, für den Bau von Sportruderbooten wie Skullbooten, Kajaks, Einer, Kanadier, Gigs und dergleichen.

In einer weiteren Ausführungsform der Erfindung verwendet man das modifizierte Holzmaterial für die Herstellung von Gehäusen einschließlich Gehäuseteilen für Maschinen, elektrische Geräte und dergleichen.

Durch die erhöhte Festigkeit der erfindungsgemäßen, modifizierten Holzmaterialien lässt sich in vielen Fällten eine Gewichtsersparnis durch verringerten Materialaufwand erreichen. Zudem sind die Gegenstände weitaus weniger Anfällig gegenüber Witterungseinflüssen und dem Einfluss von Feuchtigkeit. Aufgrund der hohen Dimensionsstabilität infolge des geringen Quellen- und Schwindens und den damit erreichbaren Fertigungstoleranzen kann das modifizierte Holzmaterial auch zur Herstellung von Gegenständen eingesetzt werden, in denen bislang Holz nicht eingesetzt werden konnte.

### Die folgenden Beispiele dienen der Erläuterung der Erfindung

### Vergleichsbeispiel 1:

Eine handelsübliche, wässrige Zubereitung von 1,3-Bis(hydroxymethyl)-4,5-dihydroxyimidazolidin-2-on (DMDHEU) wurde mit Wasser auf eine Konzentration von 30 Gew.-% verdünnt und mit 15 g/kg M_{g}Cl₂ x 6 H₂O vermischt. Die so erhaltene Lösung wurde in dem folgenden Versuch als Imprägniermittel eingesetzt.

Würfel aus Kiefernsplintholz mit den Abmessungen 2,5 cm x 2,5 cm x 2,5 cm, die atro getrocknet waren, wurden in eine Tränkanlage eingebracht. Die Tränkanlage wurde 30 Minuten einem Vakuum von absolut 40 mbar ausgesetzt. Anschließend wurde die Tränkanlage mit dem Imprägniermittel unter Beibehaltung eines Vakuums von 50 mbar absolut geflutet. Anschließend wurde ein Druck von 10 bar für 2 Stunden angelegt. Die Druckphase wurde beendet und die Restflüssigkeit entfernt.

Die Kiefernwürfel wurden sodann in einer über Temperatur und Luftfeuchtigkeit steuerbaren Trockenkammer gelagert. Die Kammer wurde auf 95 °C und eine relative Luftfeuchtigkeit von ca. 100 % gebracht. Diese feuchten Bedingungen wurden 48 Stunden beibehalten.

Anschließend wurden die Kiefernwürfel 72 h bei 40°C getrocknet, Die so erhaltenen Kiefernwürfel wiesen einen Stickstoffgehalt N von 4,00 g/100 g Kiefernholz auf. Die Formaldehyd-Emission FA, bestimmt mittels der Flaschenmethode nach EN 717, Teil 3, lag bei 62,2 mg/100 g Kiefernholz. Dementsprechend betrug das Verhältnis FA/N 15,5 x 10⁻³. Der Fixierungsgrad lag bei 24 %.

### Beispiel 1 (Heißdampfbehandlung, Kiefernholz):

Kiefernbretter mit den Abmessungen 250 cm x 10 cm x 3,5 cm, die auf ca. 12 % Holzfeuchte getrocknet waren, wurden in eine Tränkanlage eingebracht. Die Tränkanlage wurde 30 Minuten einem Vakuum von absolut 40 mbar ausgesetzt. Anschließend wurde die Tränkanlage mit dem Imprägniermittel aus Vergleichsbeispiel 1 unter Beibehaltung eines Vakuums von 50 mbar absolut geflutet. Anschließend wurde ein Druck von 12 bar für 2 Stunden angelegt. Die Druckphase wurde beendet und die Restflüssigkeit wurde entfernt.

Die Kiefernbretter wurden sodann in einer über Temperatur und Luftfeuchtigkeit steuerbaren Trockenkammer gelagert und so fixiert, dass ein Verwerfen unmöglich war.
Die Kammer wurde unter Beibehaltung einer relativen Luftfeuchtigkeit von 100 % auf 100 °C gebracht. Anschließend wurde die Kammer verschlossen und unter Beibehaltung einer Nasstemperatur von 100°C auf eine Trockentemperatur von 120 °C erhitzt. Diese Bedingungen wurden bis zum Erreichen einer gleichmäßigen Holzfeuchte von etwa 8 % über den gesamten Holzquerschnitt beibehalten. Anschließend wurde der überhitzte Wasserdampf abgesaugt und durch Frischluft ersetzt, wodurch sich die Kammertemperatur auf 80 °C verringerte. Dann wurde durch Einsprenkeln von Wasser die Kammertemperatur auf 50°C verringert und eine relative Luftfeuchte 50 % eingestellt. Diese Bedingungen wurden zur Klimatisierung des Holzes 6 bis 10 h beibehalten.

Die so erhaltenen Kiefernbretter wiesen einen Stickstoffgehalt N von 3,17 g/100 g Kiefernholz auf. Die Formaldehyd-Emission FA, bestimmt mittels der Flaschenmethode nach EN 717, Teil 3, lag bei 26,4 mg/100 g Kiefernholz. Dementsprechend betrug das Verhältnis FA/N 8,33 x 10⁻³. Der Fixierungsgrad lag bei 73 %.

### Beispiel 2 (Heißdampfbehandlung + trockenes Erhitzen, Kiefernholz):

Kiefernbretter mit den Abmessungen 250 cm x 10 cm x 3,5 cm, die auf ca. 12 % Holzfeuchte getrocknet waren, wurden analog Beispiel 1 mit dem Imprägniermittel aus Vergleichsbeispiel 1 getränkt.

Die Kiefernbretter wurden sodann in einer über Temperatur und Luftfeuchtigkeit steuerbaren Trockenkammer gelagert und so fixiert, dass ein Verwerfen unmöglich war.
Die Kammer wurde unter Beibehaltung einer relativen Luftfeuchtigkeit von 100 % auf 100 °C gebracht. Anschließend wurde die Kammer verschlossen und unter Beibehaltung einer Nasstemperatur von 100°C auf eine Trockentemperatur von 120°C erhitzt. Diese Bedingungen wurden bis zum Erreichen einer gleichmäßigen Holzfeuchte von etwa 8 % über den gesamten Holzquerschnitt beibehalten. Dann wurde die Kammer unter Beibehaltung einer Nasstemperatur des Dampfes von 100 °C mit einer Aufheizrate von 5 K/h auf eine Trockentemperatur von 130 °C erhitzt. Diese Bedingungen wurden bis zum Erreichen einer gleichmäßigen Holzfeuchte von etwa 6 % über den gesamten Holzquerschnitt beibehalten. Anschließend wurde der überhitzte Wasserdampf abgesaugt und unter Beibehaltung einer Temperatur von 130 °C durch Frischluft ersetzt, wodurch sich die relative Luftfeuchte auf weniger als 10 % verringerte. Diese Bedingungen wurden bis zum Erreichen einer gleichmäßigen Holzfeuchte von etwa 4 % über den gesamten Holzquerschnitt beibehalten. Anschließend wurde die Kammertemperatur durch Einblasen von Frischluft auf 80 °C abgesenkt. Dann wurde durch Einsprenkeln von Wasser die Kammertemperatur auf 50 °C verringert und eine relative Luftfeuchte 50 % eingestellt. Diese Bedingungen wurden zur Klimatisierung des Holzes 6 bis 10 h beibehalten.

Die so erhaltenen Kiefernbretter wiesen einen Stickstoffgehalt N von 3,17 g/100 g Kiefernholz auf. Die Formaldehyd-Emission FA, bestimmt mittels der Flaschenmethode nach EN 717, Teil 3, lag bei 12,8 mg/100 g Kiefernholz. Dementsprechend betrug das Verhältnis FA/N 4,04 x 10⁻³. Der Fixierungsgrad lag bei 84 %.

### Beispiel 3 (Heißdampfbehandlung + trockenes Erhitzen, Buchenholz):

Buchenholzbretter mit den Abmessungen 50 cm x 10 cm x 3,5 cm, die auf ca. 12 % Holzfeuchte getrocknet waren, wurden analog Beispiel 1 mit dem Imprägniermittel aus Vergleichsbeispiel 1 getränkt und anschließend gemäß der Vorschrift aus Beispiel 1 sukzessive mit Heißdampf behandelt und trocken erhitzt.

Die so erhaltenen Buchenholzbretter wiesen einen Stickstoffgehalt N von 2,20 g/100 g Buchenholz auf. Die Formaldehyd-Emission FA, bestimmt mittels der Flaschenmethode nach EN 717, Teil 3, lag bei 8,9 mg/100 g Buchenholz. Dementsprechend betrug das Verhältnis FA/N 4,05 x 10⁻³. Der Fixierungsgrad lag bei 81 %.

### Beispiel 4 (Heißdampfbehandlung + trockenes Erhitzen, Buchenholz):

Eine handelsübliche, wässrige Zubereitung von 1,3-Bis(hydroxymethyl)-4,5-dihydroxyimidazolidin-2-on (DMDHEU) wurde mit Wasser auf eine Konzentration von 50 Gew.-% verdünnt und mit 25 g/kg MgCl₂ x 6 H₂O vermischt. Die so erhaltene Lösung wurde in dem folgenden Versuch als Imprägniermittel eingesetzt.

Buchenholzbretter mit den Abmessungen 50 cm x 10 cm x 3,5 cm, die auf ca. 12 % Holzfeuchte getrocknet waren, wurden analog Beispiel 1 mit dem Imprägniermittel getränkt und anschließend gemäß der Vorschrift aus Beispiel 1 sukzessive mit Heißdampf behandelt und trocken erhitzt.

Die so erhaltenen Buchenholzbretter wiesen einen Stickstoffgehalt N von 3,75 g/100 g Buchenholz auf. Die Formaldehyd-Emission FA, bestimmt mittels der Flaschenmethode nach EN 717, Teil 3, lag bei 6,1 mg/100 g Buchenholz. Dementsprechend betrug das Verhältnis FA/N 1,63 x 10⁻³. Der Fixierungsgrad lag bei 86 %.

### Beispiel 5:

Eine handelsübliche, wässrige Zubereitung von 1,3-Bis(hydroxymethyl)-4,5-dihydroxyimidazolidin-2-on (DMDHEU) wurde mit Ethylenharnstoff versetzt und mit Wasser verdünnt, so dass die Konzentration an DMDHEU 15 Gew.-% und die Konzentration an Ethylenharnstoff 7,5 Gew.-% betrug. Die Lösung wurde mit 15 g/kg MgCl₂ x 6 H₂O vermischt. Die so erhaltene Lösung wurde in dem folgenden Versuch als Imprägniermittel eingesetzt.

Kiefernbretter mit den Abmessungen 250 cm x 10 cm x 3,5 cm, die auf ca. 12 % Holzfeuchte getrocknet waren, wurden analog Beispiel 1 mit dem Imprägniermittel getränkt und anschließend gemäß der Vorschrift aus Beispiel 1 sukzessive mit Heißdampf behandelt und trocken erhitzt.

Die so erhaltenen Kiefernbretter wiesen einen Stickstoffgehalt N von 4,5 g/100 g Kiefernholz auf. Die Formaldehyd-Emission FA, bestimmt mittels der Flaschenmethode nach EN 717, Teil 3, lag bei 3,8 mg/100 g Kiefernholz. Dementsprechend betrug das Verhältnis FA/N 0,84 x 10⁻³. Der Fixierungsgrad lag bei 51 %.

In analoger Weise können folgende Lösungen als Imprägniermittel eingesetzt werden. Diese können wie folgt hergestellt werden:

### Imprägniermittel 4:

4 kg einer handelsüblichen, wässrigen Zubereitung von 1,3-Dimethyl-4,5-dihydroxyimidazolidin-2-on (40 gew.-%ig) wurden mit 2 kg einer handelsüblichen, 70 gew.-%igen, wässrigen Lösung eines Umsetzungsprodukts von Melamin mit Formaldehyd und Methanol (Molverhältnis 1:4:4) und 200 g MgCl₂ x 6H₂O vermischt und mit 3,7 kg Wasser verdünnt.

### Imprägniermittel 5:

3 kg einer handelsüblichen, wässrigen Zubereitung von 1,3-Dimethyl-4,5-dihydroxyimidazolidin-2-on (40 gew.-%ig) wurden mit 2,7 kg einer handelsüblichen, 70 gew.-%igen, wässrigen Lösung eines Umsetzungsprodukts von Melamin mit Formaldehyd und Methanol (Molverhältnis 1:4:4) und 200 g MgCl₂ x 6 H₂O vermischt und mit 4 kg Wasser verdünnt.

### Imprägniermittel 6:

2,5 kg einer handelsüblichen, wässrigen Zubereitung von 1,3-Bis(hydroxymethyl)-4,5-dihydroxyimidazolidin-2-on (75 gew.-%ig) wurden mit 2 kg einer handelsüblichen, 70 gew.-%igen, wässrigen Lösung eines Umsetzungsprodukts von Melamin mit Formaldehyd und Methanol (Molverhältnis 1:4:4) und 200 g MgCl₂ x 6 H₂O vermischt und mit 5,2 kg Wasser verdünnt.

### Imprägniermittel 7:

2,1 kg einer handelsüblichen, wässrigen Zubereitung von 1,3-Bis(hydroxymethyl)-4,5-dihydroxyimidazolidin-2-on (75 gew.-%ig) wurden mit 0,9 kg einer handelsüblichen wässrigen Zubereitung von 1-Hydroxymethyl-4,5-dihydroxyimidazolidin-2-on (75 gew.-%ig) und 150 g MgCl₂ x 6 H₂O vermischt und mit 7 kg Wasser verdünnt.

### Imprägniermittel 8:

0,9 kg einer handelsüblichen, wässrigen Zubereitung von 1,3-Bis(hydroxymethyl)-4,5-dihydroxyimidazolidin-2-on (75 gew.-%ig) wurden mit 2,1 kg einer handelsüblichen wässrigen Zubereitung von 1-Hydroxymethyl-4,5-dihydroxyimidazolidin-2-on (75 gew.-%ig) und 150 g MgCl₂ x 6 H₂O vermischt und mit 7 kg Wasser verdünnt.

### Imprägniermittel 9:

3,0 kg einer handelsüblichen wässrigen Zubereitung von 1-Hydroxymethyl-4,5-dihydroxyimidazolidin-2-on (75 gew.-%ig) wurden mit 150 g MgCl₂ x 6 H₂O vermischt und mit 7 kg Wasser verdünnt.

## Patentansprüche

1. Verfahren zur Herstellung modifizierter Lignocellulosematerialien, umfassend
a) Imprägnieren des Lignöcellulosematerials mit einer wässrigen Zusammensetzung, die i) wenigstens eine vernetzbare Stickstoffverbindung und ii) wenigstens eine die Vernetzung katalysierende Substanz enthält,
b) Behandeln des imprägnierten Lignocellulosematerials bei erhöhter Temperatur zur Entfernung des Wassers und zur Vernetzung der vernetzbaren Stickstoffverbindung,
wobei der Verfahrensschritt b) wenigstens eine Behandlung des imprägnierten Lignocellulosematerials mit überhitztem Wasserdampf umfasst, wobei der überhitzte Wasserdampf eine Temperatur von wenigstens 105 °C aufweist.

2. Verfahren nach Anspruch 1, wobei der Verfahrensschritt b) im Anschluss an die Behandlung mit überhitztem Wasserdampf, eine zusätzliche Trockenbehandlung des imprägnierten Lignocellulosematerials bei einer Temperatur von wenigstens 110°C umfasst.

3. Verfahren nach Anspruch 2, wobei die relative Feuchte des das Lignocellulosematerial umgebenden gasförmigen Mediums bei der Trockenbehandlung höchstens 20 % beträgt

4. Verfahren nach einem der vorhergehenden Ansprüche, wobei die Stickstoffverbindung ausgewählt ist unter:
α) niedermolekularen Verbindungen V, welche wenigstens eine N-gebundene Gruppe der Formel CH₂OR worin R für Wasserstoff oder C₁-C₄-Alkyl steht, und/oder eine zwei Stickstoffatome verbrückende 1,2-Bishydroxyethan-1,2-diyl-Gruppe aufweisen,
β) Präkondensaten der Verbindung V und
γ) Umsetzungsprodukten oder Mischungen der Verbindung V mit wenigstens einem Alkohol, der unter C₁-C₆-Alkanolen, C₂-C₆-Polyolen und Oligoalkylenglykolen ausgewählt ist; und
deren Gemischen untereinander, deren Gemischen mit wenigstens einer Verbindung V', die wenigstens eine freie NH-Gruppe aufweist, und deren Gemischen mit wenigstens einer Verbindung V", die wenigstens eine OH-Gruppe aufweist, welche nicht in Form einer Gruppe CH₂OH vorliegt.

5. Verfahren nach Anspruch 4, wobei die Stickstoffverbindung ausgewählt ist unter
- 1,3-Bis(hydroxymethyl)-4,5-dihydroxyimidazolidin-2-on (DMDHEU),
- 1,3-Bis(hydroxymethyl)-4,5-dihydroxyimidazolidin-2-on, das mit einem C₁-C₆-Alkanol, einem C₂-C₆-Polyol oder einem Oligoalkylenglykol modifiziert ist,
- 1,3-Bis(hydroxymethyl)harnstoff,
- 1,3-Bis(methoxymethyl)harnstoff,
- 1-Hydroxymethyl-3-methylharnstoff,
- 1-Hydroxymethyl-3-methyl-4,5-dihydroxyimidazolidin-2-on
- 1-Hydroxymethyl-4,5-dihydroxyimidazolidin-2-on
- 1,3-Bis(hydroxymethyl)imidazolidin-2-on,
- 1,3-Bis(hydroxymethyl)-1,3-hexahydropyrimidin-2-on,
- 1,3-Bis(methoxymethyl)-4,5-dihydroxyimidazolidin-2-on,
- Tetra(hydroxymethyl)acetylendiharnstoff,
- niedermolekularen Melamin-Formaldehyd-Harzen und
- niedermolekularen Melamin-Formaldehyd-Harzen, die mit einem C₁-C₆-Alkanol, einem C₂-C₆-Polyol oder einem Oligoalkylenglykol modifiziert sind,
- Gemischen der vorgenannten Verbindungen untereinander,
- Gemischen der vorgenannten Verbindungen mit wenigstens einer Verbindung V', die wenigstens eine freie NH-Gruppe aufweist, und
- Gemischen der vorgenannten Verbindungen mit wenigstens einer Verbindung V", die wenigstens eine OH-Gruppe aufweist, welche nicht in Form einer Gruppe CH₂OH vorliegt.

6. Verfahren nach einem Ansprüche 1 bis 3, wobei die Vernetzbare Stickstoffverbindung ausgewählt ist unter:
α) niedermolekularen Verbindungen V, welche wenigstens zwei N-gebundene Gruppen der Formel CH₂OR, worin R für Wasserstoff oder C₁-C₄-Alkyl steht, und/oder eine zwei Stickstoffatome verbrückende 1,2-Bishydroxyethan-1,2-diyl-Gruppe aufweisen,
β) Präkoridensaten der Verbindung V,
γ) Umsetzungsprodukten oder Mischungen der Verbindung V mit wenigstens einem Alkohol, der unter C₁-C₆-Alkanolen, C₂-C₆-Polyolen und Oligoalkylenglykolen ausgewählt ist,
deren Gemischen und Gemischen mit wenigstens einer Verbindung V', die wenigstens eine freie NH-Gruppe aufweist.

7. Verfahren nach Anspruch 6, wobei die vernetzbare Stickstoffverbindung ausgewählt ist unter
- 1,3-Bis(hydroxymethyl)-4,5-dihydroxyimidazolidin-2-on,
- 1,3-Bis(hydroxymethyl)-4,5-dihydroxyimidazolidin-2-on, das mit einem C₁-C₆-Alkanol, einem C₂-C₆-Polyol oder einem Oligoalkylenglykol modifiziert ist,
- 1,3-Bis(hydroxymethyl)harnstoff,
- 1,3-Bis(methoxymethyl)harnstoff,
- 1-Hydroxymethyl-3-methylharnstoff,
- 1,3-Bis(hydroxymethyl)imidazolidin-2-on,
- 1,3-Bis(hydroxymethyl)-1,3-hexahydropyrimidin-2-on,
- 1;3-Bis(methoxymethyl)-4,5-dihydroxyimidazolidin-2-on,
- Tetra(hydroxymethyl)acetylendiharnstoff,
- niedermolekularen Melamin-Formaldehyd-Harze,
- niedermolekularen Melamin-Formaldehyd-Harzen, die mit einem C₁-C₆-Alkanol, einem C₂-C₆-Polyol oder einem Oligoalkylenglykol modifiziert sind, und Mischungen davon und deren Mischungen mit einer Verbindung V', die wenigstens eine NH-Gruppe aufweist.

8. Verfahren nach Anspruch 7, wobei es sich bei der Stickstoffverbindung um 1,3-Bis(hydroxymethyl)-4,5-dihydroxyimidazolidin-2-on oder um eine Mischung davon mit einer Verbindung V' handelt.

9. Verfahren nach einem der vorhergehenden Ansprüche, wobei die Konzentration an vernetzbarer Stickstoffverbindung in der wässrigen Zusammensetzung im Bereich von 1 bis 60 Gew.-%, bezogen auf das Gesamtgewicht der Zusammensetzung liegt.

10. Verfahren nach einem der vorhergehenden Ansprüche, wobei die Menge an vernetzbarer Stickstoffverbindung, die in das Lignocellulosematerial eingebracht wird, im Bereich von 0,2 bis 10 Gew.%, gerechnet als Stickstoff und bezogen auf das Gewicht des eingesetzten Lignocellulosematerials, liegt.

11. Verfahren nach einem der vorhergehenden Ansprüche, wobei der Katalysator ausgewählt ist unter Metallsalzen aus der Gruppe der Metallhalogenide, Metallsulfate, Metallnitrate, Metallphosphate und Metalltetrafluoroborate; Bortrifluorid; Ammoniumsalzen aus der Gruppe der Ammoniumhalogenide, Ammoniumsulfat, Ammoniumoxalat und Diammoniumphosphat; organischen Carbonsäuren, organischen Sulfonsäuren, Borsäure, Phosphorsäure, Schwefelsäure und Salzsäure,

12. Verfahren nach einem der vorhergehenden Ansprüche, wobei das Lignocellulosematerial Holz ist.

13. Verfahren nach einem der Ansprüche 1 bis 11, wobei das Lignocellulosematerial ein Holzfurnier oder ein feinteiliges Material ist.

## Claims

1. A process for the preparation of a modified lignocellulose material, comprising
a) impregnating the lignocellulose material with an aqueous composition comprising i) at least one crosslinkable nitrogen compound and ii) at least one substance which catalyzes the crosslinking,
b) treating the impregnated lignocellulose material at elevated temperature in order to remove the water and to crosslink the crosslinkable nitrogen compound,
wherein the process stage b) comprises at least one treatment of the impregnated lignocellulose material with superheated steam, the superheated steam exhibiting a temperature of at least 105°C.

2. The process according to claim 1, wherein the process stage b) following the treatment with superheated steam comprises an additional drying treatment of the impregnated lignocellulose material at a temperature of at least 110°C.

3. The process according to claim 2, wherein the relative humidity of the gaseous medium surrounding the lignocellulose material in the drying treatment is at most 20%.

4. The process according to any of the preceding claims, wherein the nitrogen compound is chosen from:
α) low molecular weight compounds V which exhibit at least one N-bonded group of the formula CH₂OR, in which R is hydrogen or C₁-C₄-alkyl and/or a 1,2-bishydroxyethane-1,2-diyl group bridging two nitrogen atoms,
β) precondensates of the compound V, and
γ) reaction products or mixtures of the compound V with at least one alcohol chosen from C₁-C₆-alkanols, C₂-C₆-polyols and oligoalkylene glycols; and
the mixtures thereof with one another, the mixtures thereof with at least one compound V' exhibiting at least one free NH group and the mixtures thereof with at least one compound V" exhibiting at least one OH group not existing in the form of a CH₂OH group.

5. The process according to claim 4, wherein the nitrogen compound is chosen from
- 1,3-bis(hydroxymethyl)-4,5-dihydroxyimidazolidin-2-one (DMDHEU),
- 1,3-bis(hydroxymethyl)-4,5-dihydroxyimidazolidin-2-one, which is modified with a C₁-C₆-alkanol, a C₂-C₆-polyol or an oligoalkylene glycol,
- 1,3-bis(hydroxymethyl)urea,
- 1,3-bis(methoxymethyl)urea,
- 1-hydroxymethyl-3-methylurea,
- 1-hydroxymethyl-3-methyl-4,5-dihydroxyimidazolidin-2-one,
- 1-hydroxymethyl-4,5-dihydroxyimidazolidin-2-one,
- 1,3-bis(hydroxymethyl)imidazolidin-2-one,
- 1,3-bis(hydroxymethyl)-1,3-hexahydropyrimidin-2-one,
- 1,3-bis(methoxymethyl)-4,5-dihydroxyimidazolidin-2-one,
- tetra(hydroxymethyl)acetylenediurea,
- low molecular weight melamine-formaldehyde resins, and
- low molecular weight melamine-formaldehyde resins which are modified with a C₁-C₆-alkanol, a C₂-C₆-polyol or an oligoalkylene glycol,
- mixtures of the abovementioned compounds with one another,
- mixtures of the abovementioned compounds with at least one compound V' exhibiting at least one free NH group, and
- mixtures of the abovementioned compounds with at least one compound V" exhibiting at least one OH group not existing in the form of a CH₂OH group.

6. The process according to any of claims 1 to 3,
wherein the crosslinkable nitrogen compound is chosen from:
α) low molecular weight compounds V which exhibit at least two N-bonded groups of the formula CH₂OR, in which R is hydrogen or C₁-C₄-alkyl, and/or a 1,2-bishydroxyethane-1,2-diyl group bridging two nitrogen atoms,
β) precondensates of the compound V,
γ) reaction products or mixtures of the compound V with at least one alcohol chosen from C₁-C₆-alkanols, C₂-C₆-polyols and oligoalkylene glycols,
their mixtures and mixtures with at least one compound V' exhibiting at least one free NH group.

7. The process according to claim 6, wherein the crosslinkable nitrogen compound is chosen from
- 1,3-bis(hydroxymethyl)-4,5-dihydroxyimidazolidin-2-one,
- 1,3-bis(hydroxymethyl)-4,5-dihydroxyimidazolidin-2-one modified with a C₁-C₆-alkanol, a C₂-C₆-polyol or an oligoalkylene glycol,
- 1,3-bis(hydroxymethyl)urea,
- 1,3-bis(methoxymethyl)urea,
- 1-hydroxymethyl-3-methylurea,
- 1,3-bis(hydroxymethyl)imidazolidin-2-one,
- 1,3-bis(hydroxymethyl)-1,3-hexahydropyrimidin-2-one,
- 1,3-bis(methoxymethyl)-4,5-dihydroxyimidazolidin-2-one,
- tetra(hydroxymethyl)acetylenediurea,
- low molecular weight melamine-formaldehyde resins,
- low molecular weight melamine-formaldehyde resins modified with a C₁-C₆-alkanol, a C₂-C₆-polyol or an oligoalkylene glycol,
and mixtures thereof and their mixtures with a compound V' exhibiting at least one NH group.

8. The process according to claim 7, wherein the nitrogen compound is 1,3-bis(hydroxymethyl)-4,5-dihydroxyimidazolidin-2-one or a mixture thereof with a compound V'.

9. The process according to any of the preceding claims, wherein the concentration of crosslinkable nitrogen compound in the aqueous composition ranges from 1 to 60% by weight, based on the total weight of the composition.

10. The process according to any of the preceding claims, wherein the amount of crosslinkable nitrogen compound introduced into the lignocellulose material ranges from 0.2 to 10% by weight, calculated as nitrogen and based on the weight of the lignocellulose material used.

11. The process according to any of the preceding claims, wherein the catalyst is chosen from metal salts from the group of the metal halides, metal sulfates, metal nitrates, metal phosphates and metal tetrafluoroborates; boron trifluoride; ammonium salts from the group of the ammonium halides, ammonium sulfate, ammonium oxalate and diammonium phosphate; organic carboxylic acids, organic sulfonic acids, boric acid, phosphoric acid, sulfuric acid and hydrochloric acid.

12. The process according to any of the preceding claims, wherein the lignocellulose material is wood.

13. The process according to any of claims 1 to 11,
wherein the lignocellulose material is a wood veneer or a finely divided material.

## Revendications

1. Procédé pour la production de matériaux lignocellulosiques, comprenant
a) l'imprégnation du matériau lignocellulosique avec une composition aqueuse qui contient i) au moins un composé azoté réticulable et ii) au moins une substance catalysant la réticulation,
b) traitement à haute température du matériau lignocellulosique imprégné, pour l'élimination de l'eau et pour la réticulation du composé azoté réticulable,
l'étape b) du procédé comportant au moins un traitement du matériau lignocellulosique imprégné, par de la vapeur d'eau surchauffée, à une température d'au moins 105 °C.

2. Procédé selon la revendication 1, dans lequel à la suite du traitement par de la vapeur d'eau surchauffée, l'étape b) du procédé comprend un traitement de séchage supplémentaire du matériau lignocellulosique imprégné, à une température d'au moins 110 °C.

3. Procédé selon la revendication 2, dans lequel l'humidité relative du milieu gazeux entourant le matériau lignocellulosique est de 20 % au maximum lors du traitement de séchage.

4. Procédé selon l'une quelconque des revendications précédentes, dans lequel le composé azoté est choisi parmi :
α) des composés V de faible masse moléculaire, qui comportent au moins un groupe, lié à N, de formule CH₂OR dans laquelle R représente un atome d'hydrogène ou un groupe alkyle en C₁-C₄, et/ou un groupe 1,2-bishydroxyéthane-1,2-diyle pontant deux atomes d'azote,
β) des produits de précondensation du composé V et
γ) des produits de réaction ou des mélanges du composé V avec au moins un alcool qui est choisi parmi des alcanols en C₁-C₆, des polyols en C₂-C₆ et des oligoalkylèneglycols ; et
des mélanges de tels composés entre eux, leurs mélanges avec au moins un composé V' qui comporte au moins un groupe NH libre, et leurs mélanges avec au moins un composé V" qui comporte au moins un groupe OH qui ne se trouve pas sous la forme d'un groupe CH₂OH.

5. Procédé selon la revendication 4, dans lequel les composés azotés sont choisis parmi
- la 1,3-bis(hydroxyméthyl)-4,5-dihydroxyimidazolidin-2-one (DMDHEU),
- une 1,3-bis(hydroxyméthyl)-4,5-dihydroxyimidazolidin-2-one qui a été modifiée par un alcanol en C₁-C₆, un polyol en C₂-C₆ ou un oligoalkylèneglycol,
- la 1,3-bis(hydroxyméthyl)urée,
- la 1,3-bis(méthoxyméthyl)urée,
- la 1-hydroxyméthyl-3-méthylurée,
- la 1-hydroxyméthyl-3-méthyl-4,5-dihydroxyimidazolidin-2-one,
- la 1-hydroxyméthyl-4,5-dihydroxyimidazolidin-2-one,
- la 1,3-bis(hydroxyméthyl)imidazolidin-2-one,
- la 1,3-bis(hydroxyméthyl)-1,3-hexahydropyrimidin-2-one,
- la 1,3-bis(méthoxyméthyl)-4,5-dihydroxyimidazolidin-2-one,
- la tétra(hydroxyméthyl)acétylènediurée,
- des résines mélamine-formaldéhyde de faible masse moléculaire et
- des résines mélamine-formaldéhyde de faible masse moléculaire qui sont modifiées par un alcanol en C₁-C₆, un polyol en C₂-C₆ ou un oligoalkylèneglycol,
- des mélanges des composés précités entre eux,
- des mélanges des composés précités avec au moins un composé V' qui comporte au moins un groupe NH libre, et
- des mélanges des composés précités avec au moins un composé V" qui comporte au moins un groupe OH qui ne se trouve pas sous la forme d'un groupe CH₂OH.

6. Procédé selon l'une quelconque des revendications 1 à 3, dans lequel le composé azoté réticulable est choisi parmi :
α) des composés V de faible masse moléculaire, qui comportent au moins deux groupes, liés à N, de formule CH₂OR, dans laquelle R représente un atome d'hydrogène ou un groupe alkyle en C₁-C₄, et/ou un groupe 1,2-bishydroxyéthane-1,2-diyle pontant deux atomes d'azote,
β) des produits de précondensation du composé V et
γ) des produits de réaction ou des mélanges du composé V avec au moins un alcool qui est choisi parmi des alcanols en C₁-C₆, des polyols en C₂-C₆ et des oligoalkylèneglycols,
des mélanges de ceux-ci et des mélanges avec au moins un composé V' qui comporte au moins un groupe NH libre.

7. Procédé selon la revendication 6, dans lequel le composé azoté réticulable est choisi parmi
- la 1,3-bis(hydroxyméthyl)-4,5-dihydroxyimidazolidin-2-one,
- une 1,3-bis(hydroxyméthyl)-4,5-dihydroxyimidazolidin-2-one qui a été modifiée par un alcanol en C₁-C₆, un polyol en C₂-C₆ ou un oligoalkylèneglycol,
- la 1,3-bis(hydroxyméthyl)urée,
- la 1,3-bis(méthoxyméthyl)urée,
- la 1-hydroxyméthyl-3-méthylurée,
- la 1,3-bis(hydroxyméthyl)imidazolidin-2-one,
- la 1,3-bis(hydroxyméthyl)-1,3-hexahydropyrimidin-2-one,
- la 1,3-bis(méthoxyméthyl)-4,5-dihydroxyimidazolidin-2-one,
- la tétra(hydroxyméthyl)acétylènediurée,
- des résines mélamine-formaldéhyde de faible masse moléculaire,
- des résines mélamine-formaldéhyde de faible masse moléculaire qui sont modifiées par un alcanol en C₁-C₆, un polyol en C₂-C₆ ou un oligoalkylèneglycol,
et des mélanges de ceux-ci et des mélanges des composés précités avec un composé V' qui comporte au moins un groupe NH.

8. Procédé selon la revendication 7, dans lequel le composé azoté consiste en la 1,3-bis(méthoxyméthyl)-4,5-dihydroxyimidazolidin-2-one ou en un mélange de celle-ci avec un composé V'.

9. Procédé selon l'une quelconque des revendications précédentes, dans lequel la concentration du composé azoté réticulable dans la composition aqueuse se situe dans la plage allant de 1 à 60 % en poids, par rapport au poids total de la composition.

10. Procédé selon l'une quelconque des revendications précédentes, dans lequel la quantité du composé azoté réticulable qui est introduit dans le matériau lignocellulosique se situe dans la plage allant de 0,2 à 10 % en poids, calculé en tant qu'azote et par rapport au poids du matériau lignocellulosique utilisé.

11. Procédé selon l'une quelconque des revendications précédentes, dans lequel le catalyseur est choisi parmi des sels métalliques appartenant au groupe des halogénures métalliques, des sulfates métalliques, des nitrates métalliques, des phosphates métalliques et des tétrafluoroborates métalliques ; le trifluorure de bore ; des sels d'ammonium choisis dans le groupe constitué par les halogénures d'ammonium, le sulfate d'ammonium, l'oxalate d'ammonium et le phosphate de diammonium ; des acides carboxyliques organiques, des acides sulfoniques organiques, l'acide borique, l'acide phosphorique, l'acide sulfurique et l'acide chlorhydrique.

12. Procédé selon l'une quelconque des revendications précédentes, dans lequel le matériau lignocellulosique est le bois.

13. Procédé selon l'une quelconque des revendications 1 à 11, dans lequel le matériau lignocellulosique est un placage de bois ou une matière finement divisée.
